(19) **Europäisches Patentamt**

**European Patent Office**

**Office européen des brevets**

(11) **EP 1 717 888 A1**

(12) **EUROPEAN PATENT APPLICATION**
published in accordance with Art. 158(3) EPC

(43) Date of publication:
02.11.2006 Bulletin 2006/44

(51) Int Cl.:
*H01M 4/58* (2006.01)   *C01B 31/04* (2006.01)
*H01M 4/02* (2006.01)   *H01M 10/40* (2006.01)

(21) Application number: 05709827.9

(22) Date of filing: 07.02.2005

(86) International application number:
**PCT/JP2005/001775**

(87) International publication number:
**WO 2005/078829 (25.08.2005 Gazette 2005/34)**

(84) Designated Contracting States:
**DE**

(30) Priority: **12.02.2004 JP 2004035207**

(71) Applicant: **MITSUBISHI CHEMICAL CORPORATION**
**Tokyo 108-0014 (JP)**

(72) Inventors:
• **Uono, Hiroyuki,**
c/o Mitsubishi Chem. Group Science
Ami-machi,
Inashiki-gun, Ibaraki 3000332 (JP)

• **Yamaguchi, K.,**
c/o Mitsubishi Chem. Group Science
Ami-machi,
Inashiki-gun, Ibaraki 3000332 (JP)
• **Fuse, Tooru,**
c/o Mitsubishi Chemical Group Science
Ami-machi,
Inashiki-gun, Ibaraki 3000332 (JP)

(74) Representative: **HOFFMANN EITLE**
**Patent- und Rechtsanwälte**
**Arabellastrasse 4**
**81925 München (DE)**

(54) **NEGATIVE ELECTRODE MATERIAL FOR LITHIUM SECONDARY BATTERY, METHOD FOR PRODUCING SAME, NEGATIVE ELECTRODE FOR LITHIUM SECONDARY BATTERY USING SAME, AND LITHIUM SECONDARY BATTERY**

(57)    There is provided an excellent negative-electrode material using graphite for lithium secondary battery that, when used in high electrode density, can yield an excellent lithium secondary battery which has large discharging capacity, achieves high efficiency during charging and discharging, exhibits superior load characteristics, and involves only a small amount of swelling of the electrode during charging.

The material has a graphite-composite mixture powder (C) that comprises: a graphite composite powder (A) in which a graphite (D), whose aspect ratio is 1.2 or larger and 4.0 or smaller, is compounded with a graphite (E), which has orientation different from orientation of said graphite (D); and an artificial graphite powder (B).

FIG. 1(a)

**(Cont. next page)**

# FIG. 1(b)

☐ · · · GRAPHITE (D)

☐ · · · GRAPHITE (E)

**Description**

[Technical Field]

The present invention relates to a negative-electrode material for lithium secondary battery made of graphite-composite mixture powder and a production method thereof, as well as a negative electrode for lithium secondary battery and a lithium secondary battery using the same. Specifically, it relates to a negative-electrode material that, when used in high electrode density, can yield an excellent lithium secondary battery which has large discharging capacity, achieves high efficiency during charging and discharging, exhibits superior load characteristics, and involves only a small amount of swelling of the electrode during charging, and a method of producing the same, as well as a negative electrode for lithium secondary battery and a lithium secondary battery using the same.

[Background Art]

Recent years have seen increasing demands for secondary batteries with higher capacities through the miniaturization of electronic devices. Attention is given particularly to lithium secondary batteries using nonaqueous solvents, which provide higher energy density compared with nickel cadmium or nickel hydride batteries. Although studies have been widely conducted up to now for improving battery capacity, further increase in the capacity is being required as performance demanded for batteries are becoming more sophisticated.

As negative-electrode materials for lithium secondary batteries, particulate materials such as metal or graphite have been investigated until now. As the capacity of batteries increases, negative-electrode materials that can be used in higher electrode density (e.g., 1.6 g/cm$^3$ or higher), in particular, are being desired.

Graphite negative-electrode particles are known as negative-electrode materials effective for increase in the capacity. The graphite negative-electrode particles, however, are not in perfect spherical shapes but in flattened shapes such as scaly shapes: in such flattened particles the crystalline planes of graphite sites are generally in parallel with the planes in which the particles are flattened. In such cases, when pressing pressure is raised in order to achieve higher electrode density, flattened graphite negative-electrode particles tend to be oriented in parallel with a current collector and produce a uniform orientation on the whole electrode, and the resultant electrode is likely to swell due to the generation of lithium-intercalated graphite. The swelling of the electrode reduces the amount of active material that can be packed per unit volume of the electrode active material, resulting in a problem that the battery capacity decreases.

In order to solve the problems described above, it is contemplated to use a composite carbon material obtained by calcinating graphite mixed with pitch or the like.
Patent Document 1 discloses that highly crystalline graphite such as scaly natural graphite or Kish graphite is mixed with pitch or resin and pulverized, carbonized, and graphitized to be made into a composite, and the resultant composite serves as a graphite negative-electrode material that improves the shortcomings of natural graphite, i.e., offers high efficiency during initial charging and discharging, exhibits superior cycle characteristics, has large capacity, and is excellent in coatability.

Patent Document 2 discloses that graphite powder having a high degree of orientation is melt-mixed with mesophase pitch whose softening point is between 250-400 °C and then pulverized, classified, calcinated, and graphitized to be made into a composite, and that the resultant composite serves as a negative-electrode material that combines both the characteristics of graphite such as large capacity and those of mesophase pitch such as excellent handleability, exhibiting high battery efficiency and high bulk density. As the graphite powder, graphite such as natural graphite or artificial graphite are used. However, the shapes of the graphite particles are not specified in terms of aspect ratio or other parameters.

Another problem which arises when the graphite negative-electrode material is used in higher electrode density is that since it breaks and exposes wider areas of its surfaces having high reactivity with an electrolyte solution, reactions with the electrolyte solution are accelerated to easily bring about decline in charging and discharging efficiency.

Besides, since the particles are likely to be crushed when used in higher electrode density, space serving as a path of lithium ions in the electrode decreases, impairing lithium ions migratability to cause decline in load characteristics. These problems are more likely to happen as the particles are flatter.

Consequently, with the view of increasing the capacity of the lithium secondary batteries further, it is desired not only that the capacity of the active material is increased but also that the negative-electrode material is made usable in higher electrode density. It is therefore strongly demanded to inhibit swelling during battery charging, to maintain charging and discharging efficiency, and to maintain load characteristics even in high electrode density.

In this regard, Patent Document 3 discloses that pitch and scaly natural graphite are melt-kneaded, compounded, and subjected to mechanochemical treatment followed by graphitization to thereby produce spherical or oval-shape composite graphite material having composite particles composed of graphite core material (A) and graphite covering material (B) together with graphite layer (C) outside the particles, their crystallinities being (A) > (B) > (C), and that the material can improve away increase in irreversible capacity and degradation in high-rate characteristics and cycle characteristics even in high density. It also discloses that reactivity with the electrolyte solution can be controlled because the graphite layer (C) is formed through the mechanochemical treatment, and that the composite particles are hardly fractured even when used in high density because the graphite core material (A) is complicatedly united with the graphite covering material (B), thereby exhibiting the excellent characteristics mentioned above.

[Patent Document 1] Japanese Patent Laid-Open Application No. 2000-182617

[Patent Document 2] Japanese Patent Laid-Open Application No. 2002-373656

[Patent Document 3] Japanese Patent Laid-Open Application No. 2003-173778

[Disclosure of the Invention]

[Problem to Be Solved by the Invention]

The composite graphite negative-electrode material disclosed in Patent Document 1 is obtained using highly-crystalline graphite material such as scaly natural graphite as material to be compounded with pitch or the like. Since the graphite material is in scaly shapes, it tends to be oriented in parallel with the electrode plane in the electrode active-material particles. In addition, because the active material particles are likely to be also in flattened shapes, the active material layer of the electrode tends to be oriented and, as a result, easily develops swelling in a direction along the thickness of the electrode during battery charging. The material is also inferior in lithium ions migratability, and is not satisfactory in battery capacity, charging and discharging efficiency, and load characteristics.

According to the graphite negative-electrode material disclosed in Patent Document 2, graphite being usually in flattened shapes is compounded in mesophase. However, it fails to take notice of flatness of the graphite, resulting in that graphite tends to be oriented in the composite powder and the electrode, as is the case of Patent Document 1. It is therefore unsatisfactory for inhibiting the swelling of the electrode when used in high electrode density.

On the other hand, according to the art disclosed in Patent Document 3, since the material is made in spherical particles of closely packed, solid state as described above, it is expected to have superior characteristics in higher electrode density compared to the art disclosed in Patent Documents 1, 2.

However, it is difficult to control the thickness of the exterior graphite layer (C) because of being united with the graphite covering material (B), resulting in a problem that battery characteristics are hard to obtain with stability. In addition, the material consists of closely packed, solid particles in spherical shapes, resulting in a problem that it is difficult to increase the packing rate of the negative electrode material in the electrode so as to obtain higher electrode density. Besides, from the viewpoint of industrial production, there is a problem in that it involves complicated manufacturing processes and high cost.

Also, the document discloses that the surface layer (C) with low crystallinity covers the core material without coming off, and that its BET specific surface area is preferably 1 $m^2$/g or smaller. It is therefore unsatisfactory because lower BET specific surface area brings about deterioration in lithium acceptance and decline in capacity during charging and charging.

The present invention has been made with the above problems in view: objectives of the present invention is to provide an excellent graphite negative-electrode material for lithium secondary battery that, when used in high electrode density, can yield a lithium secondary battery which has large discharging capacity, achieves high efficiency during charging and discharging, exhibits superior load characteristics, and involves only a small amount of swelling of the electrode during charging, and a production method thereof, as well as a negative electrode for lithium secondary battery and a lithium secondary battery using the same.

[Means for Solving the Problem]

The inventors of the present invention conducted eager study on graphite negative-electrode materials for lithium secondary battery and, as a result, have found that compounding first graphite, which has an aspect ratio within a predetermined range, and second graphite, which has an orientation different from the former graphite, produces a graphite composite powder that, when mixed with an artificial graphite powder, yields a graphite mixed powder suitable for as a negative-electrode material. When used in high electrode density, the material can yield, efficiently with stability, a high-performance lithium secondary battery which has large discharging capacity, achieves high efficiency during charging and discharging, exhibits superior load characteristics, and involves only a small amount of swelling of the electrode during charging. The inventors thereby have achieved the present invention.

According to an aspect of the present invention, there is provided a negative-electrode material for lithium secondary battery, comprising a graphite-composite mixture powder (C) that comprises: a graphite composite powder (A) in which a graphite (D), whose aspect ratio is 1.2 or larger and 4.0 or smaller, is compounded with a graphite (E), which has orientation different from orientation of said graphite (D); and an artificial graphite powder (B).

According to another aspect of the present invention, there is provided a method of producing a negative-electrode material for lithium secondary battery, comprising: mixing pulverized matter of a graphite crystal precursor, which is obtained through heat treatment of a pitch material whose quinoline insoluble content is 3 weight % or lower, and graphite (D), whose aspect ratio is 1.2 or higher and 4.0 or lower and whose tap density is 0.7 g/cm$^3$ or higher and 1.35 g/cm$^3$ or lower; carrying out heat treatment A on the mixture obtained from said mixing; pulverizing the product of said heat treatment A; and carrying out heat treatment B on the product of said pulverizing.

According to another aspect of the present invention, there is provided a method of producing a negative-electrode material for lithium secondary battery, comprising: preparing a graphite composite powder (A) from a pitch material, whose quinoline insoluble content is 3 weight % or lower, and a graphite (D), whose aspect ratio is 1.2 or higher and 4.0 and whose tap density is 0.7 g/cm$^3$ or higher and 1.35 g/cm$^3$ or lower; preparing an artificial graphite powder (B) from a pitch material; and mixing the graphite composite powder (A) and the artificial graphite powder (B).

According to another aspect of the present invention, there is provided a negative electrode for lithium secondary battery, comprising: a current collector; and an active material layer formed on said current collector; wherein said active material layer comprises the negative-electrode material for lithium secondary battery defined above.

According to another aspect of the present invention, there is provided a negative electrode for lithium secondary battery, comprising: a current collector; and an active material layer formed on said current collector; wherein said active material layer comprises a negative-electrode material for lithium secondary battery produced by the production method defined above.

According to another aspect of the present invention, there is provided a lithium secondary battery comprising: a positive electrode and a negative electrode capable of intercalating and deintercalating lithium ions; and an electrolyte; wherein said negative electrode is the negative electrode for lithium secondary battery defined above.

[Advantageous Effects of the Invention]

The negative-electrode material for lithium secondary battery of the present invention, when used in high electrode density (e.g. 1.6 g/cm$^3$ or higher), enables an excellent lithium secondary battery which has large discharging capacity, achieves high efficiency during charging and discharging, exhibits superior load characteristics, and involves only a small amount of swelling of the electrode during charging.
In addition, the production method of a negative-electrode material for lithium secondary battery of the present invention enables to produce the negative-electrode material for lithium secondary battery efficiently with stability, and is therefore quite useful from an industrial viewpoint.

[Brief Description of the Drawings]

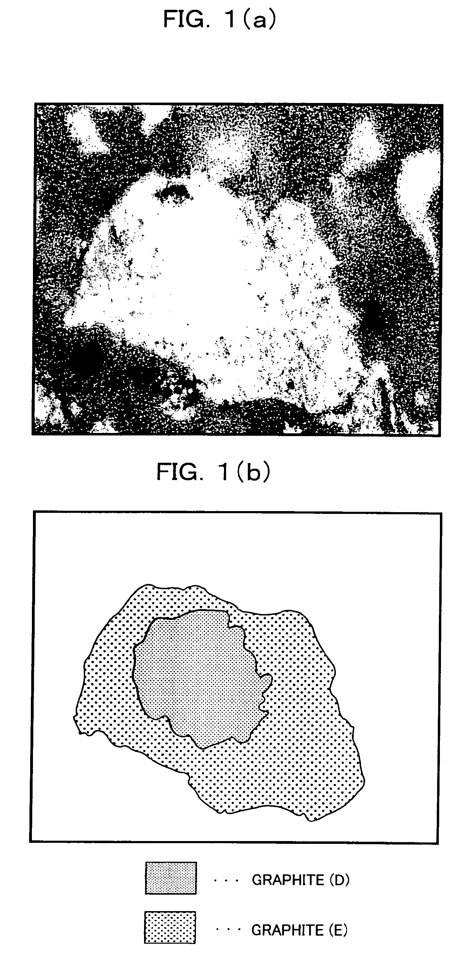

[Fig. 1] Fig. 1(a) is a polarizing microscope photograph (magnification 1500 X) showing graphite composite powder (A) appearing on a particle cross section of graphite-composite mixture powder (C) obtained after graphitization process as the negative-electrode material of Example 2, and Fig. 1(b) is a diagram schematically showing the shapes of graphite (D) and graphite (E) appearing on the particle cross section of Fig. 1 (a) .

[Best Modes for Carrying Out the Invention]

Hereinafter, the present invention will now be detailed, but is not limited to the below description. The present invention can be embodied by arbitrarily modifying without departing from the gist of the present invention.

[1. Negative-Electrode Material for Lithium Secondary Battery]

The negative-electrode material for lithium secondary battery of the present invention is a graphite-composite mixture powder (C), that includes a graphite composite powder (A) in which a graphite (D), whose aspect ratio is 1.2 or larger and 4.0 or smaller, is compounded with a graphite (E), which has an orientation different from the orientation of the graphite (D), and an artificial graphite powder (B). Alternatively, the material is a graphite-composite mixture powder (F), which includes the graphite-composite mixture powder (C) and a natural graphite powder (G).

Large capacity of the battery is achieved by graphite (D), graphite (E), and artificial graphite powder (B) that are high in crystallinity. Co-presence of the graphite (D), compounded with the graphite (E), and the artificial graphite powder (B) makes it possible to both improve the battery efficiency and inhibit electrode swelling occurred at charging.
Further, compounding with the graphite (D) having a predetermined aspect ratio makes it possible to prepare the above-defined graphite composite powder (A), whereby a battery with high load characteristics can be obtained.
Hereinafter, description will now be made in relation to these graphites (A)-(G).

[1-1. Graphite (D)]

The graphite (D) is not limited particularly as long as it satisfies the following conditions concerning orientation. Examples are natural graphite and artificial graphite. Examples of the natural graphite include scaled graphite, scaly graphite, and soil graphite. Examples of the artificial graphite include graphite particles such as mesocarbon microbeads, carbon fiber, coke, needle coke, and high-density carbon material, which are produced through the high-temperature heat treatment of pitch material.

The form of the graphite (D) should not also be limited particularly and may be in, i.e., massive, spherical, or prolate-spheroidal form. It is preferable that the particles are in substantially spherical shapes. Specifically, the aspect ratio of the particles should satisfy the following condition.

<Aspect Ratio>

The aspect ratio of the graphite (D) is within the range of usually 1.2 or larger, preferably 1.5 or larger, and usually 4.0 or smaller, preferably 3.0 or smaller. If the aspect ratio is below the above-mentioned range, the graphite (D) has a small anisotropy and takes a form close to sphere or cube, so that it is difficult to increase the packing density of the electrode obtained after pressing process. On the other hand, if the aspect ratio exceeds the above-mentioned range, the active material tends to orient on the electrode surface, making it difficult to increase load characteristics in high electrode density. Also, when it is used for battery production, the electrode develops a large amount of swelling during battery charging, making it difficult to increase the battery capacity per unit volume.

The aspect ratio of the graphite (D) can be measured either when a negative-electrode material has yet to be made into a negative electrode, using the powder of the material spread on a plate and embedded in resin, or when the material is in the form of a negative electrode, using the negative electrode, in the following manner.

The resin-embedded negative-electrode material or the negative electrode is grinded parallel to the plate and the resultant section is photographed. The obtained photograph is then image-analyzed to thereby measure 50 major axes or more of the section of graphite (D). Meanwhile, the resin-embedded negative-electrode material or the negative electrode is grinded perpendicularly to the plate and the resultant section is photographed. The obtained photograph is then image-analyzed to thereby measure 50 minor axes or more (i.e., the thickness of particles) of the section of graphite (D). The measured values of the major axes and the minor axes are separately averaged, and the ratio of the average major axis to the average minor axis is taken as the aspect ratio (major axis / minor axis). The particles embedded in resin or contained in an electrode usually tend to be arranged in such a manner that the thickness direction of the particles is perpendicular to the plate, so that it is possible to obtain the major and minor axes specific to the particles according to the above-mentioned manner.

A sectional photograph of particles can usually be taken with a scanning electron microscope (SEM). However, when an SEM photograph is insufficient to specify the shape of the graphite (D), a polarizing microscope or a transmission electron microscope (TEM) can be used to take a sectional photograph in the same manner as explained above. Since the graphite (D) has an orientation different from that of the graphite (E), the shape of the graphite (D) can be determined by observing the orientations with reference to a polarizing microscope photograph or a TEM photograph. The aspect ratio can therefore be obtained according to the image analysis as explained above.

The graphite (D) having an aspect ratio within the above-mentioned range may be obtained by any method without any particular limitation, although it is preferable to use a machine that repetitively applies mechanical action, including interaction of the particles, to the particles mainly by impulse force or by compression, friction, sharing force, or the like. Especially preferable is a machine that has a rotor in which a number of blades are arranged inside the casing and, through high-speed revolution of the rotor, produces mechanical action such as impulse compression, friction, or sharing force on carbon material fed inside the machine, thereby carrying out surface treatment. Alternatively, a preferable machine has a mechanism that repetitiously provides mechanical action by circulating carbon material. An example of such a preferable machine is a hybridization system manufactured by Nara Machinery Co., Ltd.

<Orientation>

The graphite (D) used here may be, for example, highly crystalline graphite which originally has a uniform orientation surface but is partially made in a different orientation through mechanical energy treatment or the like. An example of the method for determining orientation of the graphite (D) is observation by a polarizing microscope. This utilizes a principle that when light emitted from a single light source enters an anisotropic body whose crystal structure is anisotropic, the light varies in limited vibration directions. According to the principle, one or more colors are observed in the same particle, and the orientation of particles can be observed as the variation of the colors.

<Tap Density>

A tap density of the graphite (D) is not limited particularly, but may be within the range of usually 0.70 g/cm$^3$ or higher, preferably 0.80 g/cm$^3$ or higher, further preferably 0.90 g/cm$^3$ or higher, and usually 1.35 g/cm$^3$ or lower, preferably 1.20 g/cm$^3$ or lower. If the tap density is below the above-mentioned range, since it is difficult to increase the packing density of the active material, a battery with high capacity can hardly be obtained. On the other hand, if the tap density exceeds the above-mentioned range, the porosity of the electrode decreases, so that preferable battery characteristics can hardly be obtained.

Measurement of the tap density can be carried out by, for example, the following method. A measurement object (in this context, graphite (D)) is dropped through a sieve with 300 $\mu$m meshes into a 20 cm$^3$ tapping cell until the object fills the cell to capacity, followed by 1000 times tapping with a stroke length of 10 mm by a powder density measuring device (e.g., Tap Denser manufactured by Seishin Enterprise Co., Ltd.), after which the density is measured and taken as the tapping density.

<BET Specific Surface Area>

The BET specific surface area of the graphite (D) is not limited particularly, but is within the range of usually 3.0 m$^2$/g or larger, preferably 4.0 m$^2$/g or larger, and usually 10.0 m$^2$/g or smaller, preferably 8.0 m$^2$/g or smaller. Graphite whose BET specific surface area is below the lower limit of the above-mentioned range is not preferable from a security viewpoint because when used as the negative-electrode material, it tends to worsen lithium acceptance during battery charging and makes lithium easily deposited on the electrode surface. On the other hand, graphite whose BET specific surface area exceeds the upper limit of the range exhibits an increased reactivity with the electrolyte solution, when used as the negative-electrode material, and tends to increase gas generation, thereby making it difficult to obtain a preferable battery.

Measurement of the BET specific surface area can be carried out using a surface-area measuring instrument (e.g., an automatic surface-area analyzer manufactured by Ohkura Riken Co., Ltd.) according to the following manner. A measurement object (in this context, graphite (D)) is subjected to pre-drying at 350 °C for 15 minutes under the flow of nitrogen, followed by nitrogen adsorption BET one-point method according to gas flow method using nitrogen helium mixed gas whose relative pressure of nitrogen with respect to atmosphere pressure is precisely adjusted to 0.3, after which the value obtained by the measurement can be regarded as a BET specific surface area.

<Volume-Based Average Particle Diameter>

The volume-based average particle diameter of the graphite (D) is not limited particularly, but is within the range of usually 1.0 $\mu$m or larger, preferably 6.0 $\mu$m or larger, and usually 60 $\mu$m or smaller, preferably 30 $\mu$m or smaller. The graphite (D) having a volume-based average particle diameter below the above-mentioned range tends to aggregate, having difficulty in being mixed with a crystalline graphite precursor in the production processes described below, so that graphite composite powder (A) to be obtained tends to be heterogeneous. On the other hand, the graphite (D) having a volume-based average particle diameter in excess of the above-mentioned range tends to cause non-uniformity in coating when used as a negative-electrode material for application process in electrode production.

Measurement of the volume-based average particle diameter can be carried out in the following manner. A measurement object (in this context, graphite (D)) is mixed with a water solution (approximately 1 ml) of 2 volume % polyoxyethylene (20) sorbitan monolaurate, which serves as a surface-active agent, and subjected to measurement of an average particle diameter (the median diameter) with respect to volume by a laser-diffraction type particle-size distribution analyzer (e.g., LA-700 manufactured by Horiba Ltd.) using ion-exchanged water as a dispersion medium.

<Interlayer Spacing and Others>

The interlayer spacing $d_{002}$ of the (002) planes of the graphite (D) according to X-ray diffraction is not limited particularly, but is usually 0.3360 nm or smaller, preferably 0.3358 nm or smaller. If the graphite (D) has an interlayer spacing $d_{002}$ exceeding the above-mentioned range, i.e., has inferior crystallinity, the discharging capacity per unit weight of the active material tends to decrease when the graphite (D) is used for electrode production. On the other hand, the theoretical lower limit of the interlayer spacing $d_{002}$ is usually 0.3354 nm or larger.

The crystallite size $Lc_{004}$ along c axis of the graphite (D) according to X-ray diffraction is not limited particularly, but is within the range of usually 90 nm or larger, preferably 100 nm or larger. If the crystallite size $Lc_{004}$ is below the above-mentioned range, discharging capacity per weight of the active material tends to be small when the graphite (D) is used for electrode production.

The interlayer spacing $d_{002}$ and the crystallite size $Lc_{004}$ according to X-ray diffraction can be measured according to Gakushin method (a method stipulated by the Carbon Society of Japan). Gakushin method does not discriminate values in excess of 100 nm (1000 Å) and indicates such values by "> 1000 (Å)".

[1-2. Graphite (E)]

The graphite (E) is not limited particularly as long as it has an orientation different from that of the graphite (D). An example is artificial graphite produced by carrying out high-temperature heat treatment on pitch material.

<Orientation>

The graphite (E) has a different orientation from that of the graphite (D). To have "different orientations" means that when graphite powders are observed by a polarizing microscope to visually compare their optical anisotropic structures in terms of anisotropic unit pattern, i.e., characteristics of anisotropic unit such as size, orientation, and quantity, there is any difference in at least one of the characteristics such as size, orientation, and quantity. Examples of such a case include the case where one of the graphite (D) and the graphite (E) has a single crystal orientation while the other has random crystal orientations, and the case where the graphite (D) and the graphite (E) both have single crystal orientations that are different from each other.
When at least either of the graphite (D) and the graphite (E) is not a single crystal but an aggregate of two or more units of crystal, comparison can be made in terms of aggregation pattern of anisotropic units in its optical anisotropic structure, each crystal unit of the aggregate being regarded as one region.
Specifically, the orientation of the graphite (E) can be determined according to the same method as in the case for the graphite (D).

<Interlayer Spacing>

The interlayer spacing $d_{002}$ of the (002) planes of the graphite (E) according to X-ray diffraction is not limited particularly, but is usually within the range of 0.3360 nm or smaller, preferably 0.3358 nm or smaller. If the graphite (E) has an interlayer spacing $d_{002}$ exceeding the above-mentioned range, i.e., has inferior crystallinity, the discharging capacity per unit weight of the active material tends to decrease when the graphite (E) is used for an electrode. On the other hand, the theoretical lower limit of the interlayer spacing $d_{002}$ is usually 0.3354 nm or larger. The interlayer spacing $d_{002}$ is measured according to the same method as in the case for the graphite (D).
The crystallite size $Lc_{004}$ along c axis of the graphite (E) according to X-ray diffraction is not limited particularly, but is within the range of usually 90 nm or larger, preferably 100 nm or larger. If the crystallite size $Lc_{004}$ is below the above-mentioned range, the discharging capacity per weight of the active material tends to decrease when the graphite (E) is used for an electrode. The crystallite size $Lc_{004}$ is measured according to the same method as in the case for the graphite (D).

[1-3. Graphite Composite Powder (A)]

Graphite composite powder (A) is a material in which the graphite (D) is compounded with the graphite (E). The term "compounded" represents a state where the graphite (E) covers, and/or combines with, the graphite (D).

<State of Compound>

In the graphite composite powder (A), the graphite (D) may be compounded with the graphite (E) in any state that should not be particularly limited, examples of which state are the following.

I) a state in which the entire or part of the surface of the graphite (D) is covered with the graphite (E);
II) a state in which the graphite (E) is bound to the entire or part of the surface of the graphite (D), so that two or more particles of the graphite (D) are compounded with the graphite (E); and
III) a state in which the state (I) and the state (II) are co-present at an arbitrary ratio.

<Shape>

The shape of the graphite composite powder (A) is not limited particularly. Examples include massive shape, spherical shape, and elliptical shape, among which a shape close to sphere is preferred. Specifically, it is preferable that the aspect ratio satisfies the below conditions.

<Aspect Ratio>

The aspect ratio of the graphite composite powder (A) is not limited particularly, but is within the range of usually 1.1 or higher, preferably 1.3 or higher, and usually 4.0 or lower, preferably 3.0 or lower. If the aspect ratio is below the above-mentioned range, the graphite composite powder (A) has a small anisotropy and takes a form close to sphere or cube, so that it is difficult to increase the packing density of an electrode obtained after pressing process. On the other hand, if the aspect ratio exceeds the above-mentioned range, the active material tends to orient on the electrode surface, making it difficult to increase load characteristics in high electrode density. Also, when it is used for battery production, the electrode develops a large amount of swelling during battery charging, making it difficult to increase the battery capacity per unit volume.

The aspect ratio of the graphite composite powder (A) can be measured, as is the case for the graphite (D), in the following procedure.

The resin-embedded negative-electrode material or the negative electrode is grinded parallel to the plate and the resultant section is photographed. The obtained photograph is then image-analyzed to thereby measure 50 major axes or more of the section of graphite composite powder (A). Meanwhile, the resin-embedded negative-electrode material or the negative electrode is grinded perpendicularly to the plate and the resultant section is photographed. The obtained photograph is then image-analyzed to thereby measure 50 minor axes or more (i.e., the thickness of particles) of the section of graphite composite powder (A). The measured values of the major axes and the minor axes are separately averaged, and the ratio of the average major axis to the average minor axis is taken as the aspect ratio (major axis / minor axis).

A sectional photograph of particles may be taken through any one of a SEM, a polarizing microscope, and a TEM, although an SEM is usually used in particular for photographing the graphite composite powder (A).

<Tap Density>

A tap density of the graphite composite powder (A) is not limited particularly, but is within the range of usually 0.80 $g/cm^3$ or higher, preferably 0.90 $g/cm^3$ or higher, and usually 1.35 $g/cm^3$ or lower, preferably 1.30 $g/cm^3$ or lower. If the tap density is below the above-mentioned range, since it is difficult to increase the packing density of the active material, a battery with high capacity can hardly be obtained. On the other hand, if the tap density exceeds the above-mentioned range, the porosity of the electrode decreases, so that preferable battery characteristics can hardly be obtained. The tap density is measured according to the same method as in the case for the graphite (D).

<BET Specific Surface Area>

The BET specific surface area of the graphite composite powder (A) is not limited particularly, but is within the range of usually 0.8 $m^2/g$ or larger, preferably 2.0 $m^2/g$ or larger, and usually 5.5 $m^2/g$ or smaller, preferably 4.0 $m^2/g$ or smaller. Graphite whose BET specific surface area is below the lower limit of the above-mentioned range is not preferable from a security viewpoint because when used as the negative-electrode material, it tends to worsen lithium acceptance during battery charging and makes lithium easily deposited on the electrode surface. On the other hand, graphite whose BET specific surface area exceeds the upper limit of the range exhibits an increased reactivity with the electrolyte solution, when used as the negative-electrode material, and tends to increase gas generation, thereby making it difficult to obtain a preferable battery. The BET specific surface area is measured according to the same method as in the case for the graphite (D).

<Volume-Based Average Particle Diameter>

The volume-based average particle diameter of the graphite composite powder (A) is not limited particularly, but is within the range of usually 6.0 $\mu$m or larger, preferably 10.0 $\mu$m or larger, and usually 80.0 $\mu$m or smaller, preferably 40.0 $\mu$m or smaller. If the volume-based average particle diameter is below the above-mentioned range, the resultant graphite-composite mixture powder (C) exhibits a low tap density when used for an electrode, so that it is difficult to increase the packing density of the active material, making it difficult to obtain a preferable battery. On the other hand, if the volume-based average particle diameter exceeds the above-mentioned range, the resultant graphite-composite mixture powder (C) tends to cause non-uniformity in coating when used for application process in electrode production. The volume-based average particle diameter is measured according to the same method as in the case for the graphite (D).

<Content of Graphite (D) in Graphite Composite Powder (A)>

The content of the graphite (D) in the graphite composite powder (A) is, in terms of the weight ratio of the graphite (D) to the graphite composite powder (A), within the range of usually 30 weight % or higher, preferably 40 weight % or higher, further preferably 50 weight % or higher, and usually 97 weight % or lower, preferably 90 weight % or lower, further preferably 83 weight % or lower. If the content of the graphite (D) falls short of the above-mentioned range, the amount of the graphite (E) becomes large accordingly to make it difficult to increase packing density in electrode production, requiring excessively large amounts of pressing load. As a result, advantages of compounding the graphite (D) are hardly obtained. On the other hand, if the content of the graphite (D) exceeds the above-mentioned range, the resultant electrode exhibits high reactivity with the electrolyte solution and tends to generate larger amounts of gas. As a result, advantages of compounding with the graphite (E) are hardly obtained.

[1-4. Artificial Graphite Powder (B)]

The artificial graphite powder (B) is not limited particularly. An example of the artificial graphite powder (B) is artificial graphite produced by carrying out high temperature heat treatment on pitch material.
Specifically, artificial graphite powder (B) may be either (i) artificial graphite particles prepared independently or (ii) artificial graphite particles obtained when the graphite (D) is compounded with the graphite (E), which is different in orientation from the graphite (D), as by-product in which the graphite (E) granulates singly without the graphite (D). The artificial graphite particles (ii) are advantageous from the view of preparation easiness because the graphite (E) and the artificial graphite powder (B) can be prepared from the same material at a time.
One of the characteristics of the artificial graphite powder (B) is that it has high crystallinity without containing any portion that has different orientation, such as graphite particles. The artificial graphite powder (B) therefore can be discriminated from the graphite composite powder (A) based on their orientations, by taking a sectional photograph of either a negative-electrode material powder which has yet to be made into a negative electrode or a negative-electrode material powder appearing on a section of a negative electrode through a polarizing microscope or a TEM in the same manner as is the case of the graphite (D).
The shape of the artificial graphite powder (B) is not limited particularly. Examples include massive shape, spherical shape, elliptical shape, slice shape, and fibrous shape, among which massive shape, spherical shape, and elliptical shape are preferable.

<BET Specific Surface Area>

The BET specific surface area of the artificial graphite powder (B) is not limited particularly, although being usually within the range of usually 0.3 m$^2$/g or larger, preferably 0.5 m$^2$/g or larger, more preferably 0.6 m$^2$/g or larger, and usually 3.0 m$^2$/g or smaller, preferably 2.8 m$^2$/g or larger, more preferably 2.0 m$^2$/g or smaller. If the BET specific surface area is under the lower limit of the range, it is not preferable from the security viewpoint because acceptance of lithium during battery charging tends to be deteriorated to cause deposition of lithium on the electrode surface. On the other hand, if the BET specific surface area exceeds the upper limit of the range, the resultant electrode has an increased reactivity with the electrolyte solution and tends to increase gas generation, making it difficult to obtain a preferable battery. The BET specific surface area is measured according to the same method as in the case for the graphite (D).

<Volume-Based Average Particle Diameter>

The volume-based average particle diameter of the artificial graphite powder (B) is not limited particularly, being within the range of usually 3 μm or larger, preferably 5 μm or larger, more preferably 6 μm or larger, and usually 30 μm or smaller, preferably 20 μm or smaller. If the volume-based average particle diameter is below the above-mentioned range, the resultant graphite-composite mixture powder (C) exhibits a low tap density when used for an electrode, so that it is difficult to increase the packing density of the active material, thereby making it difficult to obtain a preferable battery. On the other hand, if the volume-based average particle diameter exceeds the above-mentioned range, the resultant negative-electrode material tends to cause non-uniformity in coating when used for application process in electrode production. The volume-based average particle diameter is measured according to the same method as in the case for the graphite (D).

<Tap Density>

A tap density of artificial graphite powder (B) is not limited particularly, but is within the range of usually 0.90 g/cm$^3$ or higher, preferably 1.10 g/cm$^3$ or higher, and usually 1.35 g/cm$^3$ or lower, preferably 1.30 g/cm$^3$ or lower. If the tap density is below the above-mentioned range, since it is difficult to increase the packing density of the active material, a battery with high capacity can hardly be obtained. On the other hand, if the tap density exceeds the above-mentioned range, the porosity of the electrode decreases, so that preferable battery characteristics can hardly be obtained. The tap density is measured according to the same method as in the case for the graphite (D).

<Interlayer Spacing>

The interlayer spacing $d_{002}$ of the (002) planes of the artificial graphite powder (B) according to X-ray diffraction is not limited particularly, but is usually 0.3360 nm or smaller, preferably 0.3358 nm or smaller. If the artificial graphite powder (B) has an interlayer spacing $d_{002}$ larger than the above-mentioned range, i.e., has inferior crystallinity, the discharging capacity per unit weight of the active material tends to be small when the artificial graphite powder (B) is used for an electrode. On the other hand, the theoretical lower limit of the interlayer spacing $d_{002}$ is usually 0.3354 nm or larger. The interlayer spacing $d_{002}$ is measured according to the same method as in the case for the graphite (D).

The crystallite size $Lc_{004}$ along c axis of the artificial graphite powder (B) according to X-ray diffraction is not limited particularly, but is usually 90 nm or larger, preferably 100 nm or larger. If the crystallite size $Lc_{004}$ is below the above-mentioned range, the discharging capacity per weight of the active material tends to decrease when the artificial graphite powder (B) is used for an electrode. The crystallite size $Lc_{004}$ is measured according to the same method as in the case for the graphite (D).

[1-5. Graphite-Composite Mixture Powder (C)]

Graphite-composite mixture powder (C) is a mixture of the graphite composite powder (A) and the artificial graphite powder (B).

<Tap Density>

A tap density of the graphite-composite mixture powder (C) is not limited particularly, but is within the range of usually 0.80 $g/cm^3$ or higher, preferably 0.90 $g/cm^3$ or higher, more preferably 1.0 $g/cm^3$ or higher, and usually 1.4 $g/cm^3$ or lower, preferably 1.35 $g/cm^3$ or lower, further preferably 1.3 $g/cm^3$ or lower. If the tap density is below the above-mentioned range, it is difficult to increase the packing density of the active material, so that a battery with high capacity is hardly obtained. On the other hand, if the tap density exceeds the above-mentioned range, the porosity of the electrode decreases, so that preferable battery characteristics can hardly be obtained. The tap density is measured according to the same method as in the case for the graphite (D).

<BET Specific Surface Area>

A BET specific surface area of the graphite-composite mixture powder (C) is not limited particularly, but is within the range of usually 1 $m^2/g$ or larger, preferably 1.5 $m^2/g$ or larger, more preferably 1.8 $m^2/g$ or larger, and usually 5 $m^2/g$ or smaller, preferably 3.5 $m^2/g$ or smaller, more preferably 3 $m^2/g$ or smaller. Graphite-composite mixture powder whose BET specific surface area is below the lower limit of the above-mentioned range is not preferable from a security viewpoint because when used as the negative-electrode material, it tends to worsen lithium acceptance during battery charging and makes lithium easily deposited on the electrode surface. On the other hand, graphite-composite mixture powder whose BET specific surface area exceeds the upper limit of the range exhibits an increased reactivity with the electrolyte solution, when used as the negative-electrode material, and tends to increase gas generation, thereby making it difficult to obtain a preferable battery. The BET specific surface area is measured according to the same method as in the case for the graphite (D).

<Interlayer Spacing and Others>

An interlayer spacing $d_{002}$ of the (002) planes of the graphite-composite mixture powder (C) according to X-ray diffraction is not limited particularly, but is usually 0.3360 nm or smaller, preferably 0.3358 nm or smaller. If the graphite-composite mixture powder (C) has an interlayer spacing $d_{002}$ value larger than the above-mentioned range, i.e., has inferior crystallinity, the discharging capacity per unit weight of the active material tends to decrease when the graphite-composite mixture powder (C) is use for an electrode. On the other hand, the theoretical lower limit of the interlayer spacing $d_{002}$ is usually 0.3354 nm or larger. The interlayer spacing $d_{002}$ is measured according to the same method as in the case for the graphite (D).

The crystallite size $Lc_{004}$ along c axis of the graphite-composite mixture powder (C) according to X-ray diffraction is not limited particularly, but is usually 90 nm or larger, preferably 100 nm or larger. If the crystallite size $Lc_{004}$ is below

the above-mentioned range, discharging capacity per weight of the active material tends to be small when the graphite-composite mixture powder (C) is used for electrode production. The crystallite size $Lc_{004}$ is measured according to the same method as in the case for the graphite (D).

<Content of Graphite Composite Powder (A) in Graphite-Composite Mixture Powder (C)>

The content of the graphite composite powder (A) in the graphite-composite mixture powder (C) is, in terms of the weight ratio of the graphite composite powder (A) to the graphite-composite mixture powder (C), within the range of usually 35 weight % or higher, preferably 50 weight % or higher, further preferably 55 weight % or higher, and usually 98 weight % or lower, preferably 90 weight % or lower, further preferably 86 weight % or lower. If the content of the graphite composite powder (A) falls short of the above-mentioned range, the content of the artificial graphite powder (B) becomes large accordingly to make it difficult to increase packing density in electrode production, requiring excessively large amounts of pressing load. As a result, advantages of mixing the artificial graphite powder (B) are hardly obtained. On the other hand, if the content of the graphite composite powder (A) exceeds the above-mentioned range, the excess of the graphite composite powder (A) may defect electrode coatability.

<Volume-Based Average Particle Diameter>

The volume-based average particle diameter of the graphite-composite mixture powder (C) is not limited particularly, but is within the range of usually 5 μm or larger, preferably 8 μm or larger, and usually 60 μm or smaller, preferably 30 μm or smaller. If the volume-based average particle diameter is below the above-mentioned range, since the tap density becomes small, it is difficult to increase the packing density of the active material in electrode production, so that a battery with large capacity can hardly be obtained. On the other hand, the volume-based average particle diameter exceeds the above-mentioned range, the resultant material tends to cause non-uniformity in coating when used for application process in electrode production. The volume-based average particle diameter is measured according to the same method as in the case for the graphite (D).
In the meantime, when the graphite-composite mixture powder (C) is available, it is possible to obtain individual data of the graphite composite powder (A) and the artificial graphite powder (B) contained in the graphite-composite mixture powder (C), such as tap density, specific surface area, particle diameter, etc., according to the following method.
Various kinds of graphite-composite mixture powders (C) are prepared using the same materials and the same method except that the combination ratio between the graphite composite powder (A) and the artificial graphite powder (B) is varied. From the graphite-composite mixture powders (C) prepared with different combination ratios, various data such as tap density, specific surface area, and particle diameter are obtained. Based on the dependence of the obtained data on the combination ratio, it is possible to obtain the individual data of the graphite composite powder (A) and the artificial graphite powder (B), such as tap density, specific surface area, and particle diameter.

[1-6. Graphite-Composite Mixture Powder (F) and Natural Graphite Powder (G)]

Next, explanation is made on graphite-composite mixture powder (F). The graphite-composite mixture powder (F) includes natural graphite powder (G) as well as the ingredients of the graphite-composite mixture powder (C) mentioned above. The natural graphite powder (G) is used for the purposes of controlling the BET specific surface area of the negative-electrode material, improving press properties of the electrode, improving discharging capacity, lowering costs, etc.
The natural graphite powder (G) is not limited particularly. Examples of the natural graphite are scaled graphite, scaly graphite, and earthy graphite.
The shape of the natural graphite powder (G) also is not limited particularly. Examples are massive form, spherical form, elliptical form, slice form, and fibrous form.

<BET Specific Surface Area>

The BET specific surface area of the natural graphite powder (G) is not limited particularly, but is within the range of usually 3.0 m$^2$/g or larger, preferably 3.5 m$^2$/g or larger, further preferably 4.0 m$^2$/ghighe larger, and usually 10 m$^2$/g or smaller, preferably 8.0 m$^2$/ or smaller, further preferably 7.0 m$^2$/g or smaller. The natural graphite powder (G) whose BET specific surface area is below the above-mentioned range is not preferable because it reduces the effect of controlling the BET specific surface area of the graphite-composite mixture powder (F). On the other hand, the natural graphite powder (G) whose BET specific surface area exceeds the upper limit of the above-mentioned range is also not preferable because it lowers safety. The BET specific surface area is measured according to the same method as in the case for the graphite (D).

<Volume-Based Average Particle Diameter>

The volume-based average particle diameter of the natural graphite powder (G) is not limited particularly, but is within the range of usually 5 $\mu$m or larger, preferably 10 $\mu$m or larger, and is usually 40 $\mu$m or smaller, preferably 30 $\mu$m or smaller. If the volume-based average particle diameter is below the above-mentioned range, the resultant graphite-composite mixture powder (F) exhibits a low tap density when used for an electrode, so that it is difficult to increase the packing density of the active material, making it difficult to obtain a preferable battery. On the other hand, if the volume-based average particle diameter exceeds the above-mentioned range, the resultant graphite-composite mixture powder (F) tends to cause non-uniformity in coating when used for application process in electrode production. The volume-based average particle diameter is measured according to the same method as in the case for the graphite (D).

<Content of Graphite-Composite Mixture Powder (C) in Graphite-Composite Mixture Powder (F)>

The content of the graphite-composite mixture powder (C) in the graphite-composite mixture powder (F) is within the range of usually 20 weight % or higher, preferably 30 weight % or higher, further preferably 40 weight % or higher, and usually 90 weight % or lower, preferably 80 weight % or lower, further preferably 70 weight % or lower, with respect to the total weight. If the content of the graphite-composite mixture powder (C) is below the above-mentioned range, it is not preferable because excellent battery characteristics originating from the graphite-composite mixture powder (C) are hardly exhibited. On the other hand, if the content exceeds the upper limit of the range, it is also not preferable because press properties of the electrode are hardly improved.

[1-7. Others]

Hereinafter, when necessary, the graphite-composite mixture powder (C) and the graphite-composite mixture powder (F) are distinguishedly called "the negative-electrode material (I) of the present invention" and "the negative-electrode material (II) of the present invention", respectively. On the other hand, when there is no need to distinguish the graphite-composite mixture powder (C) from the graphite-composite mixture powder (F), the graphite-composite mixture powder (C) and the graphite-composite mixture powder (F) are collectively called "the negative-electrode material of the present invention".

<Active Material Orientation Ratio of Produced Electrode>

The negative-electrode material of the present invention preferably has the following characteristics when used as an active material in production of a negative electrode for lithium secondary battery.

Specifically, when the negative-electrode material is used as an active material to produce an electrode whose electrode density is $1.63 \pm 0.05$ g/cm$^3$, that is, within the range of between 1.58 g/cm$^3$ and 1.68 g/cm$^3$ both inclusive, the active material orientation ratio of the electrode is within the range of usually 0.07 or larger, preferably 0.09 or larger, more preferably 0.10 or larger, and is usually 0.20 or smaller, preferably 0.18 or smaller, further preferably 0.16 or smaller. If the active material orientation ratio is below the above-mentioned range, the resultant battery exhibits a large amount of electrode swelling during battery charging, making it difficult to increase the battery capacity per unit volume of the electrode. On the other hand, if the active material orientation ratio exceeds the above-mentioned range, the active material exhibits low crystallinity in battery production, making it difficult to increase the discharging capacity of the battery or to increase the packing density of the electrode after being pressed.

Here, the active material orientation ratio of an electrode is a value indicating the degree of orientation of graphite crystal hexagon netplane along the thickness direction of the electrode. A larger orientation ratio represents a lower degree of orientation of the graphite crystal hexagon netplane in the particles.

The active material orientation ratio of electrode is measured in the following procedure.

(1) Production of Electrode:

The negative-electrode material is mixed with a solution of CMC (carboxymethylcellulose), serving as a thickener, and a solution of SBR (styrene butadiene rubber), serving as a binder resin, in such a manner that if the resultant mixture of the negative-electrode material, CMC, and SBR is dried, each content of CMC and SBR be 1 weight % with respect to the total solid content. The mixture is stirred and made into the form of slurry, which is then applied with a doctor blade onto a copper foil of 18 $\mu$m in thickness. The gap of the blade, which defines the thickness to be applied, is adjusted in such a manner that the electrode weight (exclusive of the copper foil) becomes 10 mg/cm$^2$ after being dried. The resultant electrode is then dried at 80 °C and pressed in such a manner that the electrode density (exclusive of the copper foil) is $1.63 \pm 0.05$ g/cm$^3$.

(2) Measurement of Active Material Orientation Ratio:

Using the electrode after press, the active material orientation ratio is measured by means of X-ray diffraction. The method of measurement is not limited particularly, although a standard method is carried out using charts of the (110) planes and the (004) planes measured by means of X-ray diffraction. Peaks in the measured charts are isolated by fitting with asymmetric Peason VII as a profile function, and the intensities of the peaks are integrated for the (110) planes and the (004) planes. Using the integrated intensities, the ratio represented by (the integrated intensity of the (110) planes) / (the integrated intensity of the (004) planes) is calculated to define the active material orientation ratio of the electrode.

The measurement conditions of X-ray diffraction are as follows. In the condition, "2θ" represents the angle of diffraction.

· target: Cu(Kα-ray) graphite monochrometer
· slit: divergent slit = 1 degree,

receiving slit = 0.1 mm,
scattering slit = 1 degree

· measurement region and step angle/measurement time:

(110) surface: 76.5 degrees < 2θ < 78.5 degrees, 0.01 degree / 3 seconds
(004) surface: 53.5 degrees < 2θ < 56.0 degrees, 0.01 degree / 3 seconds

· sample preparation: the electrode is fixed to a glass plate with a double-sided tape of 0.1 mm in thickness.

According to the above-mentioned method, it is possible to obtain the active material orientation ratio by means of X-ray diffraction, using the electrode which has been produced so as to have the electrode density of $1.63 \pm 0.05$ g/cm$^3$.

<Discharging Capacity of Lithium Secondary Battery>

A lithium secondary battery produced by using the negative-electrode material of the present invention as the active material of the negative electrode preferably has the following characteristics.
Specifically, when the negative-electrode material of the present invention is used as an active material to form an active material layer on a current collector and the resultant negative electrode is used for a lithium secondary battery, the discharging capacity of the lithium secondary battery is usually 345 mAh/g or larger, preferably 350 mAh/g or larger. If the discharging capacity is below the above-mentioned range, the battery capacity tends to decrease. It is preferred that the discharging capacity takes the largest possible value, although the upper limit of discharging capacity is usually about 365 mAh/g.
The method of measuring the discharging capacity is not limited particularly, although a standard measuring method can be shown as follows.
First, an electrode using a negative-electrode material is prepared. The electrode is produced by forming an active material layer on a copper foil, which serves as a current collector. The active material layer is made from the mixture of the negative-electrode material and styrene butadiene rubber (SBR), which serves as a binder resin. The amount of the binder resin is set to be 1 weight % with respect to the weight of the electrode. The electrode density is set to be 1.45 g/cm$^3$ or larger and 1.95 g/cm$^3$ or smaller.
The discharging capacity of the produced electrode is evaluated using a bipolar coin cell, which is composed of the produced electrode together with metal lithium serving as the counter electrode, by carrying out charging and discharging test.
The electrolyte solution for the bipolar coin cell may be an arbitrary solution, examples of which include the mixture solution of ethylene carbonate (EC) and diethyl carbonate (DEC) at the volume ratio of DEC/EC = 1/1-7/3 and the mixture solution of ethylene carbonate and ethyl methyl carbonate (EMC) at the volume ratio of EMC/EC = 1/1-7/3.
The separator for the bipolar coin cell may be also selected arbitrarily, an example of which is a polyethylene sheet of 15 μm to 35 μm in thickness.

The discharging capacity is obtained by carrying out charging and discharging test on the thus-produced bipolar coin cell. Specifically, the lithium counter electrode is charged to 5 mV under the electric current density of 0.2 mA/cm$^2$, and further charged until the electric current value reaches 0.02 mA, whereby lithium is doped into the negative electrode. The lithium counter electrode is then discharged to 1.5V under the electric current value of 0.4 mA/cm$^2$. This charging and discharging cycle is repeated three times, after which the discharging value on the third cycle is regarded as the discharging capacity.

[2. Production Method of Negative-Electrode Material for Lithium Secondary Battery]

[Production Method of Graphite-Composite Mixture Powder (C)]

The negative-electrode material (I) of the present invention, i.e., the graphite-composite mixture powder (C), contains the graphite composite powder (A) in which the graphite (D) is compounded with the graphite (E) which has orientation different from that of the graphite (D), and the artificial graphite powder (B). Different from conventional composite graphite powder production, the graphite-composite mixture powder (C) can be obtained by the following selections of materials and production conditions.

Specifically, a material whose aspect ratio is within the above-mentioned range is used as the material for the graphite (D), which is mixed with pitch material, or heat-treated and pulverized product of pitch material, as the precursor of the graphite (E), after which the mixture is subjected to heat treatment and other procedures, and so on.

The reason why the graphite-composite mixture powder (C) is obtained according to the above selections for materials and production conditions is presumed as follows.

Using the graphite (D) whose aspect ratio is 1.2 or higher and 4.0 or lower makes the obtained graphite composite powder (A) have an aspect ratio within the defined range. Further, in the particles of the graphite composite powder (A), the graphite (D) is covered with or bounded to the graphite (E), which is different in orientation, so that the graphite (D) and the graphite (E) are combined in random orientations.

More specifically, the graphite-composite mixture powder (C) can be obtained by, for example, either of the following two production methods.

(Production Method 1)

Pulverized matter of a graphite crystal precursor, which is obtained from pitch heat treatment of pitch material whose quinoline-insoluble content is 3.0 weight % or lower, is mixed with graphite (D), whose aspect ration is 1.2 or higher and 4.0 or lower while whose tap density is 0.7 g/cm$^3$ or higher and 1.35 g/cm$^3$ or lower. The mixture is subjected to heat treatment A, followed by pulverization, and then to heat treatment B.

In other words, the graphite (E) and the graphite crystal precursor, which serves as material of the artificial graphite powder (B), are mixed with the graphite (D) at a predetermined ratio. The mixture is subjected to heat treatment A, after which the product is pulverized and then subjected to heat treatment B (calcination, graphitization), thereby the graphite-composite mixture powder (C) being prepared.

It is preferable to use a graphite crystal precursor that has a volatile content of usually 5 weight % or higher and 20 weight % or lower. Using a graphite crystal precursor whose volatile content is within the above-mentioned range makes the graphite (D) be compounded with the graphite (E) through heat treatment A, whereby graphite-composite mixture powder (C) having the above-defined properties can be obtained. In addition, a negative electrode using the graphite-composite mixture powder (C) as an active material is preferable because it has an active material orientation ratio within the above-mentioned range.

(Production Method 2)

The graphite composite powder (A) is produced using pitch material, whose quinoline-insoluble content is 3.0 weight % or lower, and graphite (D), whose aspect ratio is 1.2 or higher and 4.0 or lower while whose tap density is 0.7 g/cm$^3$ or higher and 1.35 g/cm$^3$ or lower. Separately from that, the artificial graphite powder (B) is prepared from a graphite crystal precursor in the same manner as in the production method 1. The graphite composite powder (A) and the artificial graphite powder (B) thus obtained are mixed to be the graphite-composite mixture powder (C).

Specifically, pitch material that can be made into liquid through heat treatment or with solvent should be used to prepare the graphite composite powder (A) in which the content of the graphite (E) with respect to the graphite composite powder (A) is 3 weight % or higher and 70 weight % or lower. By mixing the obtained graphite composite powder (A) with the artificial graphite powder (B), which is prepared from a graphite precursor separately from the graphite composite powder (A), it is possible to produce the graphite-composite mixture powder (C) having the above-defined properties.

Hereinafter, the production method 1 and the production method 2 will be explained in detail.

[2-1. Production Method 1]

Production method 1 will be explained first.

To begin with, explanation will be made on a method of carrying out heat treatment on pitch material beforehand to prepare bulk mesophase (a graphite crystal precursor having undergone heat treatment, hereinafter called a "heat-treated graphite crystal precursor" as required), which serves as a precursor of graphite crystal.

<Starting Material>

Pitch material is used as starting materials of the graphite (E) and the artificial graphite powder (B), contained in the graphite-composite mixture powder (C) of the present invention. In the present Description, the term "pitch material" represents pitch or its equivalent that can be graphitized through an appropriate treatment. Examples of pitch material include tar, heavy oil, and pitch. Examples of tar are coal tar and petroleum tar. Examples of heavy oil are catalytically cracked oil component, thermally decomposited oil component, normal pressure oil residue, and reduced pressure oil residue of petroleum heavy oil. Examples of pitch are coal tar pitch, petroleum pitch, or synthetic pitch. Among them, coal tar pitch is preferable because of its high aromaticity. These pitch material may be used singly or in combination of any two or more at an arbitrary ratio.

The quinoline-insoluble content of the above pitch material to be used is not limited particularly, although being usually 3.0 weight % or lower, preferably 1.0 weight % or lower, more preferably 0.02 weight % or lower. The quinoline-insoluble content represents submicron carbon particles and infinitesimal sludge minutely contained in coal tar. An excessive amount of quinoline-insoluble content extremely impedes progress of crystallization during graphitization process and causes drastic decline in discharging capacity after graphitization. The quinoline-insoluble content can be measured according to the method defined by JIS K2425.

In combination with the pitch material explained above, it is also possible to use various resins such as thermosetting resins and thermoplastic resins as long as the effect of the present invention is not harmed.

<Production of Heat-Treated Graphite Crystal Precursor>

Selected from the above examples, pitch material is subjected to heat treatment in advance to be made into heat-treated graphite crystal precursor. The heat treatment carried out in advance is referred to as pitch heat treatment. After pulverized and mixed with the graphite (D), the heat-treated graphite crystal precursor partially or entirely melts through heat treatment A. By regulating volatile content through the advance heat treatment, it is possible to appropriately control the melting state of the heat-treated graphite crystal precursor. The volatile content in the heat-treated graphite crystal precursor usually includes hydride, benzene, naphthalene, anthracene, pyrene, and others.

Temperature conditions during the pitch heat treatment are not limited particularly, although being usually 300 °C or higher, preferably 450 °C or higher, and usually 550 °C or lower, preferably 510 °C or lower. If the heat treatment temperature is lower than the above-mentioned range, the amount of volatile content increases, making it difficult to carry out pulverization safe in the atmosphere. On the other hand, if the heat treatment temperature is higher than the above-mentioned range, the heat-treated graphite crystal precursor partially or entirely remains unmelted even after heat treatment A, thereby making it difficult to obtain compounded particles (graphite composite powder (A)) of the graphite (D) and the heat-treated graphite crystal precursor.

The time length for carrying out pitch heat treatment is not limited particularly, although being usually one hour or longer, preferably 10 hours or longer, and usually 48 hours or shorter, preferably 24 hours or shorter. If the duration of the heat treatment is shorter than the above-mentioned range, it is not preferred because the obtained heat-treated graphite crystal precursor becomes uneven in view of production. On the other hand, if the duration of the heat treatment exceeds the above-mentioned range, it is also not preferred because it decreases productivity and increases processing cost.

The heat treatment can be carried out intermittently as long as the total duration of time that meets the above-mentioned temperature range is within the above-mentioned duration range.

The pitch heat treatment is carried out in an atmosphere of inactive gas, such as nitrogen gas, or in an atmosphere of gas volatilized from the pitch material.

An apparatus used for the pitch heat treatment is not limited particularly, examples of which are a shuttle kiln, a tunnel kiln, an electric furnace, an autoclave, and a coker (a heat-treatment vessel for coke production).

The pitch heat treatment may be carried out with agitation as required.

<Volatile Matter of Heat-Treated Graphite Crystal Precursor>

The volatile content in the graphite crystal precursor obtained through the pitch heat treatment is not limited particularly, although being usually 5 weight % or higher, preferably 6 weight % or higher, and usually 20 weight % or lower, preferably 15 weight % or lower. If the volatile content is below the above-mentioned range, the large amount of volatile content makes it difficult to carry out pulverization safe in the atmosphere. On the other hand, if the volatile content exceeds the above-mentioned range, the graphite crystal precursor partially or entirely remains unmelted even after the heat treatment A, making it difficult to obtain the compounded particles (graphite composite powder (A)) of the graphite (D) and the heat-treated graphite crystal precursor. The volatile content is measured according to the method defined in JIS M8812, for example.

<Softening Point of Heat-Treated Graphite Crystal Precursor>

The softening point of the graphite crystal precursor obtained through the pitch heat treatment is not limited particularly, although being usually 250 °C or higher, preferably 300 °C or higher, further preferably 370 °C or higher, and usually 470 °C or lower, preferably 450 °C or lower, further preferably 430 °C or lower. If the softening point is below the lower limit, carbonation yield of the graphite crystal precursor after heat treatment decreases to make it difficult to obtain a uniform mixture with graphite (D). On the other hand, if the softening point exceeds the higher limit, the graphite crystal precursor partly or entirely remains unmelted even after the heat treatment A, making it difficult to obtain the compounded particles (graphite composite powder (A)) of the graphite (D) and the heat-treated graphite crystal precursor. The softening point is measured using a sample, which is a tablet of 1 mm in thickness shaped by a tablet forming machine, with a thermal mechanical analyzer (e.g., TMA4000 manufactured by Bruker AXS Inc.) by penetration method under the conditions of nitrogen flow, temperature increasing rate of 10 °C /min., needle tip shape of 1 mm in diameter, and weighting of 20 gf.

<Pulverization of Heat-Treated Graphite Crystal Precursor>

Next, the graphite crystal precursor obtained through the pitch heat treatment is pulverized. The pulverization is carried out in order to make the crystal of the graphite crystal precursor, which arranges almost in the same orientation in large units due to the heat treatment, into finer particles and/or to make the graphite (D) mixed and compounded uniformly with the heat-treated graphite crystal precursor.

The method of pulverizing the graphite crystal precursor obtained from the pitch heat treatment is not limited particularly, although it is carried out in such a manner that the particle size of the pulverized graphite crystal precursor is usually 1 μm or larger, preferably 5 μm or larger, and usually 10 mm or smaller, preferably 5 mm or smaller, more preferably 500 μm or smaller, further preferably 200 μm or smaller, still further preferably 50 μm or smaller. If the particle size is smaller than 1 μm, the surface of the graphite crystal precursor having undergone heat treatment may be oxidized due to its contact with air during or after the pulverization, so that progress crystallization through the graphitization process is impeded to decline the discharging capacity after the graphitization. On the other hand, if the particle size exceeds 10 mm, the effect of pulverizing the graphite crystal precursor into finer particles may be hindered, so that the crystal tends to orient as well as the graphite (E) and /or the artificial graphite powder (B) tends to orient. As a consequence, an electrode using such a graphite-composite mixture powder (C) exhibits a low active material orientation ratio, making it difficult to control electrode swelling during battery charging. Additionally, or alternatively, the graphite (D) and the heat-treated graphite crystal precursor become difficult to mix uniformly and prone to compounded non-uniformly due to a large difference in particle diameter between them.

An apparatus used for pulverization is not limited particularly. Examples of coarse pulverizers are a shearing mill, a jaw crusher, an impact crusher, and a cone crusher. Examples of intermediate pulverizers are a roll crusher, and a hammer mill. Examples of fine pulverizers are a ball mill, a vibrating mill, a pin mill, an agitating mill, and a jet mill.

<Production Method of Graphite-Composite Mixture Powder (C)>

The graphite (D) and the heat-treated graphite crystal precursor (material for the graphite (E) and the artificial graphite powder (B)) are mixed at a predetermined ratio, and subjected to the heat treatment A, the pulverization, and the heat treatment B (calcination, graphitization), thereby the graphite-composite mixture powder (C) is prepared.

<Mixing Ratio of the Graphite (D) and Heat-Treated Graphite Crystal Precursor>

The mixing ratio of the graphite (D) and the heat-treated graphite crystal precursor prior to the heat treatment A is not limited particularly, although the ratio of the graphite (D) with respect to the mixture is usually 20 weight % or higher, preferably 30 weight % or higher, further preferably 40 weight % or higher, and usually 80 weight % or lower, preferably 70 weight % or lower. If the mixing ratio is below the lower limit, since the ratio of the graphite (E) and/or the artificial graphite powder (B) in the graphite-composite mixture powder (C) increases accordingly, the resultant electrode becomes difficult to increase its packing density and therefore requires a large amount of press load, making it difficult to obtain advantages of compounding the graphite (D). If the mixing ratio exceeds the upper limit, the surface of the graphite (D) in the graphite composite powder (A) may be exposed more largely to increase the specific surface area of the graphite-composite mixture powder (C), being not preferable from the viewpoint of powder properties.

<Mixing>

An apparatus used for mixing the graphite (D) with the heat-treated graphite crystal precursor, whose particle size has been adjusted to a predetermined value, is not limited particularly, examples of which apparatus include a V-type mixer, a W-type mixer, a container-changeable type mixer, a kneader, a drum mixer, and a shear mixer.

<Heat Treatment A>

Subsequently, the mixture of the graphite (D) and the heat-treated graphite crystal precursor is subjected to the heat treatment A. The heat treatment A is carried out in order to remelt or fuse the pulverized heat-treated graphite crystal precursor and so that the graphite (D) and the heat-treated graphite crystal precursor in the form of fine particles are fixed while being in contact with random orientations. Though the heat treatment A, the mixture of the graphite (D) and the heat-treated graphite crystal precursor becomes not a simple mixture of particles but a more-uniformly compounded mixture (hereinafter called "graphite composite mixture" as required).

Temperature conditions of the heat treatment A are not limited particularly, although being usually 300 °C or higher, preferably 400 °C or higher, further preferably 450 °C or higher, and usually 650 °C or lower, preferably 600 °C or lower. If the temperature for the heat treatment A is below the above-mentioned range, since a large amount of volatile content still remains in the material obtained after the heat treatment A, powder particles may be fused together during the calcination or graphitization process, so that there arises a need for undesirable re-pulverization. On the other hand, if the temperature of the heat treatment A exceeds the above-mentioned range, remelted particles may crack into needle-shaped fragments to cause an undesirable decline in tap density.

The time length for carrying out the heat treatment A is not limited particularly, although being usually 5 minutes or longer, preferably 20 minutes or longer, and usually 3 hours or shorter, preferably 2 hours or shorter. If the duration of the heat treatment A is shorter than the above-mentioned range, volatile content may become heterogeneous to cause fusion of particles during calcination or graphitization. On the other hand, if the duration exceeds the above-mentioned range, productivity may decrease while processing cost may increase.

The heat treatment A is carried out under an atmosphere of inactive gas, such as nitrogen gas, or under an atmosphere of gas volatilized from the heat-treated graphite crystal precursor, which has been made into fine particles by pulverization.

An apparatus used for the heat treatment A is not limited particularly, examples of which include a shuttle kiln, a tunnel kiln, and an electric furnace.

<Substitute Treatment for Pulverization and Heat Treatment A on Heat-Treated Graphite Crystal Precursor>

The pulverization and the heat treatment A explained above can be substituted by a treatment in which the structure of the heat-treated graphite crystal precursor can be made into finer particles and disorientated, e.g., a treatment in which the heat-treated graphite crystal precursor undergoes mechanical energy at a temperature region within which it melts or softens, while being mixed with the graphite (D) followed by heat treatment.

The substitute heat treatment is not limited particularly, although being carried out at a temperature of usually 200 °C or higher, preferably 250 °C or higher, and usually 450 °C or lower, preferably 400 °C or lower. If the temperature condition of the substitute treatment is below the above-mentioned range, meltage and softening of the graphite crystal precursor does not adequately proceed during the substitute treatment, being difficult to be compounded with the graphite (D). On the other hand, if the temperature condition exceeds the above-mentioned range, the heat treatment tends to proceed too rapidly, so that particles of the artificial graphite powder (B) and others tend to crack into needle-shape fragments during pulverization, easily bringing about decline in tap density.

Further, the time length for the treatment is not limited particularly, although being usually 30 minutes or longer, preferably one hour or longer, and usually 24 hours or shorter, preferably 10 hours or shorter. If the duration of the treatment is shorter than the above-mentioned range, it is not preferable in terms of productivity because the graphite crystal precursor having undergone the substitute treatment may become heterogeneous. On the other hand, if the duration of the treatment is longer than the above-mentioned range, it is also not preferable because productivity may decrease while processing cost may increase.

The substitute treatment is usually carried out under an atmosphere of inactive gas, such as nitrogen gas, or under an oxidative atmosphere such as air. When the treatment is carried out under an oxidative atmosphere, however, it may be difficult to obtain high crystallinity after graphitization, so that excessive infusibilization due to oxygen should be avoided. Specifically, the oxygen content in the graphite crystal precursor after the substitute treatment should be usually 8 weight % or lower, preferably 5 weight % or lower.

An apparatus used for the substitute treatment is not limited particularly, examples of which include a mixer and a kneader.

<Pulverization>

Next, the graphite composite mixture having undergone the heat treatment A is pulverized. The masses of the graphite composite mixture, which has been compounded with the graphite (D) and melted or welded with its structure being made in fine particles and disorientated through the heat treatment A, is pulverized into particles having the intended diameter.

The particle diameter of the graphite composite mixture after pulverized is not limited particularly, although being usually 6 $\mu$m or larger, preferably 9 $\mu$m or larger, and usually 65 $\mu$m or smaller, preferably 35 $\mu$m or smaller. If the particle diameter is smaller than the above-mentioned range, the graphite composite negative-electrode material (C) exhibits a low tap density, making it difficult to increase the packing density of the active material during electrode production, so that a battery with large capacity is hardly obtained. On the other hand, if the particle diameter exceeds the above-mentioned range, the resultant composite negative-electrode material (C) tends to cause undesired nonuniformity in application when used for producing an electrode by application method.

An apparatus used for pulverization is not limited particularly. Examples of coarse pulverizers are a jaw crusher, an impact crusher, and a cone crusher. Examples of intermediate pulverizers are a roll crusher and a hammer mill. Examples of fine pulverizers are a ball mill, a vibrating mill, a pin mill, an agitating mill, and a jet mill.

<Heat Treatment B: Calcination >

The heat treatment B includes calcination and graphitization. Hereinafter the calcination will be explained first, although the calcination can be omitted.

The calcination is carried on the graphite composite mixture, which has been pulverized in the pulverization step, for removing the volatile content in the graphite composite mixture so as to prevent the graphite composite mixture from fusing together during graphitization.

Temperature condition for the calcination is not limited particularly, although being usually 600 °C or higher, preferably 1000 °C or higher, and usually 2400 °C or lower, preferably 1300 °C or lower. If the temperature condition is below the range, it is not preferable because the graphite composite mixture powder tends to fuse together during the graphitization. On the other hand, if the temperature condition exceeds the range, it is also not preferable because equipment costs for calcination may increase.

Time length of the calcination for which the temperature condition is maintained within the above temperature range is not limited particularly, although being usually 30 minutes or longer and 72 hours or shorter.

The calcination is carried out under an atmosphere of an inactive gas, such as nitrogen gas, or under a non-oxidative atmosphere of a gas generated from the re-pulverized graphite composite mixture. In order to simplify production process, however, it is also possible to omit the calcination and to carry out graphitization immediately.

An apparatus used for calcination is not limited particularly, examples of which include a shuttle kiln, a tunnel kiln, an electric furnace, a lead hammer kiln, and a rotary kiln.

<Heat Treatment B: Graphitization>

Next, graphitization is carried out on the graphite composite mixture after the calcination. The graphitization is performed in order to improve crystallinity in order to increase discharging capacity measured in battery evaluation. After the graphitization, the graphite-composite mixture powder (C) (the negative-electrode material (I) of the present invention) is obtained.

Temperature condition of the graphitization is not limited particularly, although being within the range of usually 2800 °C or higher, preferably 3000 °C or higher and usually 3200 °C or lower, preferably 3100 °C or lower. If the temperature exceeds the above-mentioned range, it is difficult to produce a battery with large capacity because reversible capacity tends to decline. On the other hand, if the temperature exceeds the above-mentioned range, the sublimation amount of graphite tends to increase.

The retention time of the graphitization is not limited particularly, although being usually longer than 0 minute or longer and 24 hours or shorter.

The graphitization is carried out under an atmosphere of an inactive gas, such as argon gas, or under a non-oxidative atmosphere of a gas generated from the calcinated graphite composite mixture.

An apparatus used for the graphitization is not limited particularly, examples of which include a direct current-carrying kiln, an Acheson kiln, and an indirect current-carrying type kiln such as a resistance heating kiln or an induction heating kiln.

During the graphitization treatment or the preceding steps, i.e., from the heat treatment step to the calcination step, it is also possible to add a graphitization catalyst, such as Si, B, or the like, to the inside or the surface of the material (the graphite (D), the pitch material or the graphite crystal precursor).

[Production Method 2]

Next, production method 2 will be explained.

<Production Method of Graphite Composite Powder>

The above-described pitch material and the graphite (D) are mixed at an arbitrary ratio, and the heat treatment B is carried out on the mixture to prepare the graphite composite powder (A).

<Production Method of Artificial Graphite Powder>

In a way similar to the production method 1, the pitch material is made into a graphite crystal precursor through pitch heat treatment. The graphite crystal precursor may be made into particles through fine pulverization or using an intermediate pulverizer as explained above.

The graphite crystal precursor is then subjected to pulverization and heat treatments A and B so as to produce the artificial graphite powder (B). The pulverization and the heat treatments can be carried out in an arbitrary order, and the heat treatment A can be omitted.

<Mixing>

Prepared as above, the graphite composite powder (A) and the artificial graphite powder (B) are mixed using any one of the apparatuses mentioned in the above "mixing" section of the production method 1.

The ratio of the graphite composite powder (A) and the artificial graphite powder (B) is, in terms of the weight ratio of the artificial graphite powder (B) with respect to the total weight of the graphite composite powder (A) and the artificial graphite powder (B), within the range of usually 2 weight % or higher, preferably 10 weight % or higher, more preferably 14 weight % or higher, and usually 65 weight % or lower, preferably 50 weight % or lower, more preferably 45 weight % or lower. If the weight ratio is below the above-mentioned range, since the ratio of the artificial graphite powder (B) increases accordingly, the packing density of the resultant electrode is difficult to increase, so that a great amount of press load is required, advantages of mixing the artificial graphite powder (B) being hardly obtained. On the other hand, if the weight ratio exceeds the range, since the ratio of the graphite composite powder (A) becomes excessive, electrode coatability may be deteriorated.

<Other Treatments>

In addition to the above treatments, it is also possible to carry out a variety of treatments, such as classification treatment, unless the effects of the present invention are impaired. The classification treatment is carried out for removing excessively rough or fine particles in order to adjust the particle size after the graphitization treatment into intended particle diameters.

An apparatus used for the classification treatment is not limited particularly. As to the case of dry sieving, examples are a rotary sieve, a swing sieve, a gyratory sieve, and a turning sieve. As to the case of dry air-flow classification, examples are a gravity classifier, an inertial classifier, and a centrifuge classifier (e.g., Classifier or Cyclone). As to wet sieving, examples are a mechanical wet classifier, a hydraulic power classifier, a precipitation classifier, and a centrifuge wet classifier.

The classification treatment may be carried out either immediately after the pulverization following the heat treatment A or at any other timing, e.g., after the calcination following the pulverization or after the graphitization. Also, the classification treatment can be omitted. In order to decrease the BET specific surface area of the graphite-composite mixture powder (C), as well as in view of productivity, it is preferable to carry out the classification treatment immediately after the pulverization following the heat treatment A.

[Treatment Performed after Production of Graphite-Composite Mixture Powder (C)]

The graphite-composite mixture powder (C) may be mixed with artificial graphite powder or natural graphite powder, which is prepared separately from the graphite-composite mixture powder (C), in order to control the BET specific surface area of the resultant negative-electrode material, to improve electrode press properties and discharging capacity, and to reduce production costs. When artificial graphite powder is added, the added powder can be regarded as part of the artificial graphite powder (B), which is an ingredient of the graphite-composite mixture powder (C). On the other hand, when natural graphite powder is added, the added powder serves as the natural graphite powder (G) while the entire mixture powder serves as the graphite-composite mixture powder (F).

[3. Negative Electrode for Lithium Secondary Battery]

A negative electrode for lithium secondary battery can be produced by forming, on a current collector, an active material layer that contains the negative-electrode material of the present invention as the active material.

The negative electrode can be produced according to a known method. For example, the negative electrode active material is combined with a binder, a thickener, a conductor, a solvent, and the likes, to be made into slurry, which is applied to a current collector, dried, and then pressed to increase its density. It is also possible to use any other active material in combination with the negative-electrode material of the present invention.

It is desirable that the density of the negative electrode layer is usually 1.45 g/cm$^3$ or larger, preferably 1.55 g/cm$^3$ or larger, more preferably 1.6 g/cm$^3$ or larger because the resultant battery is equipped with an increased capacity. The negative electrode layer means a layer formed on a current collector and containing an active material, a binder, an electrically conductive material, and others, while the density of the negative electrode layer means its density when ready for battery assemblage.

As the binder, any substance can be used as long as it is stable both in a solvent and in an electrolyte solution used in the electrode production. Examples are poly(vinylidene fluoride), polytetrafluoroethylene, polyethylene, polypropylene, styrene butadiene rubber, isoprene rubber, butadiene rubber, ethylene-acrylic acid copolymer and ethylen-methacrylic acid copolymer. These may be used either singly or in combination of any two or more at an arbitrary ratio.

As the thickener, any known substance can be arbitrarily selected and used. Examples are carboxylmethylcellulose, methylcellulose, hydroxymethylcellulose, ethylcellulose, poly vinyl alcohol, oxidized starch, phosphatized starch, and casein. These may be used either singly or in combination of any two or more at an arbitrary ratio.

Examples of the electrically conductive material are: metal materials, such as copper and nickel; and carbon materials, such as graphite and carbon black. These may be used either singly or in combination of any two or more at an arbitrary ratio.

Examples of the material for a current collector for a negative electrode include copper, nickel, and stainless steel. Among these, a copper foil is preferred in view of formability into a thin layer and costs. These may be used either singly or in combination of any two or more at an arbitrary ratio.

[4. Lithium Secondary Battery]

The negative-electrode material of the present invention is valuable when used as a material for an electrode of a battery. In particular, the above negative-electrode material of the present invention is extremely valuable when used for a negative electrode of a nonaqueous secondary battery such as a lithium secondary battery including positive and negative electrodes capable of intercalating and deintercalating lithium and an electrolyte solution. For example, if the negative-electrode material of the present invention is used for a negative electrode, which is incorporated into a nonaqueous secondary battery together with a metal chalcogenide positive electrode for a lithium secondary battery ordinarily used and an organic electrolytic solution whose main ingredient is a carbonate solvent, the produced secondary battery is large in capacity and small in reversible capacity confirmed in initial cycles, high in rapid charging/discharging capacity, excellent in cycle characteristics and in preserving characteristics and reliability when being left in a high-temperature environment, and extremely excellent in high efficiency discharging characteristics and in discharging characteristics at low temperature.

Components required for assembling the above-explained lithium secondary battery, such as the positive electrode and the electrolyte solution, can be selected without any particular limitations. Hereinafter, examples of the material for each of the components that compose a lithium secondary battery together with the negative-electrode material of the present invention, although materials that can be used are not limited to the following examples.

As the material for the positive electrode, it is possible to use materials capable of intercalating and deintercalating lithium, examples of which are: lithium transition metal composite oxide materials, such as lithium cobalt oxide, lithium nickel oxide, and lithium manganese oxide; transition metal oxide materials, such as manganese dioxide; and carbon materials, such as graphite fluoride. More specifically, usable materials include $LiFeO_2$, $LiCoO_2$, $LiNiO_2$, $LiMn_2O_4$,

and their non-stoichiometric compounds, $MnO_2$, as well as $TiS_2$, $FeS_2$, $Nb_3S_4$, $Mo_3S_4$, $CoS_2$, $V_2O_5$, $P_2O_5$, $CrO_3$, $V_3O_3$, $TeO_2$, and $GeO_2$. The production method of the positive electrode is not limited particularly, and may be carried out according to the same method as that of the electrode described above.

As the material for a current collector of the positive electrode, it is preferable to use valve metals and their alloys, which form a passivation coating layer on its surface through anodic oxidation in an electrolyte solution. Examples of valve metals include metals belonging to any one of Group IIIb, Group IVa, or Group Va as well as their alloys. Specifically, Al, Ti, Zr, Hf, Nb, and Ta as well as their alloys are mentioned. Among them, Al, Ti, Ta and alloys containing these metals can be used preferably. In particular, Al and its alloys are preferable because they are light in weight and produce high energy density.

As the electrolyte, it is possible to use any forms of electrolyte, including electrolyte solutions and solid electrolytes. In this context, the electrolytes mean all the ion conductive materials, while the electrolyte solutions and the solid electrolytes are both included in the electrolytes.

An electrolyte solution can be prepared by dissolving a solute in a nonaqueous solvent. Alkali metal salts and quaternary ammonium salts can be used as the solute. Specifically, it is preferable to use one or more compounds selected from the group consisting of $LiClO_4$, $LiPF_6$, $LiBF_4$, $LiCF_3SO_3$, $LiN(CF_3SO_2)_2$, $LiN(CF_3CF_2SO_2)_2$, $LiN(CF_3SO_2)$ $(C_4F_9SO_2)$, and $LiC(CF_3SO_2)_3$.

Examples of the nonaqueous solvent include: cyclic carbonates such as ethylene carbonate, propylene carbonate, butylene carbonate, and vinylene carbonate; cyclic esters such as $\gamma$-butyrolactone; chain esters such as 1,2-dimethoxyethane; cyclic ethers such as crown ether, 2-methyl tetrahydrofuran, 1,2-dimethyl tetrahydrofuran, 1,3-dioxolane, and tetrahydrofuran; and chain carbonates such as diethyl carbonate, ethyl methyl carbonate, and dimethyl carbonate. These examples of each of the solute and the solvent may be used either singly or in combination of any two or more at an arbitrary mixing ratio. Among those, it is preferable that the nonaqueous solution includes at least one cyclic carbonate and at least one chain carbonate.

Alternatively, the nonaqueous electrolyte solution may be in the form of gel or rubber prepared by adding an organic polymer compound to the electrolyte solution, or may be a solid electrolyte in the form of a solid sheet. Examples of the organic polymer are: polyether polymer compounds such as polyethylene oxide and polypropylene oxide; cross-linked polymers of polyether polymer compounds; vinyl alcohol polymer compounds such as polyvinyl alcohol and polyvinyl butyral; insoluble contents of vinyl alcohol polymer compounds; polyepichlorohydrin; polyphosphazene; polysiloxane; vinyl polymer compounds such as polyvinyl pyrrolidone, polyvinylidene carbonate, and polyacrylonitrile; polymer copolymers such as poly($\omega$-methoxy oligo oxy ethylene methacrylate) and poly($\omega$-methoxy oligo oxy ethylene methacrylate-co-methyl methacrylate).

The separator is not limited particularly either in its material or its shape. The separator is used for separating the positive electrode from the negative electrode to avoid physical contact between these electrodes, being preferably made of a material that is high in ion permeability and low in electric resistance. The material of the separator is preferably selected from materials that are stable in the electrolyte solution and superior in water-retaining characteristics. Specifically, a porous sheet or a nonwoven fabric made of polyolefin, such as polyethylene or polypropylene, can be used the separator material, which is impregnated with the electrolyte solution.

The production method of a lithium secondary battery that includes at least the electrolyte solution, the negative electrode and the positive electrode is not limited particularly, and can be selected from various methods that can usually be adopted.
In addition to the electrolyte solution, the negative electrode and the positive electrode, it is possible to use, as required, an outer casing, a separator, a gasket, a sealing pad, a cell case, and others for producing a lithium secondary battery.

An example of the production method of a lithium secondary battery includes: disposing a negative electrode into an outer can; arranging an electrolyte solution and a separator on the negative electrode; disposing a positive electrode in such a position that the positive electrode faces the negative electrode; and caulking the outer can together with a gasket and a sealing pad.

The shape of the battery is not limited particularly, and may take the form of, for example: cylinder type, in which sheet electrodes and a separator are made in the form of spirals; inside-out cylinder type, in which pellet electrodes and a separator are combined; and coin type, in which pellet electrodes and a separator are layered.

[Presumed Reasons for Superior Battery Characteristics of Negative-Electrode Material of Present Invention]

It is not clear why using the negative-electrode material of the present invention as the negative electrode active material at a high electrode density yields a battery that is large in discharging capacity and high in charging and discharging efficiency, excellent in load characteristics, and small in electrode swelling during charging, although the reasons are presumed as follows.

The negative-electrode material (I) of the present invention, i.e., the graphite-composite mixture powder (C) has high crystallinity and, because of the inclusion of the graphite (D) which has the aspect ratio defined as above, exhibits large discharging capacity and excellent load characteristics. In addition, because of the inclusion of the graphite (E) whose orientation is different from that of the graphite (D), increase in its specific surface area is prevented, thereby involving high charging and discharging efficiency. Further, because the graphite (D) is compounded with the graphite (E), it has a high orientation ratio of the active material and only a small amount of swelling.

The negative-electrode material (II) of the present invention, i.e., the graphite-composite mixture powder (F), because of the inclusion of the natural graphite powder (G) in addition to the above graphite-composite mixture powder (C), it is possible to control powder characteristics more precisely, so that excellent load characteristics and long cycle life are achieved.

The advantages of the present invention are discussed in comparison with the art recited in Patent Document 3 in particular.

Since the composite graphite material of Patent Document 3 has a structure in which the exterior graphite layer (C) is united with the graphite covering material (B), it is difficult to control the thickness of the exterior graphite layer (C), involving the problem that battery characteristics are hardly exhibited with stability. In addition, since the composite graphite material is made of a spherical hard dense material alone, it is difficult to increase the packing ratio of the negative electrode material in the electrode, causing difficulty in increasing electrode density. Besides, from the view of industrial productivity, there is the problem that the production procedure is complex and costly. Further, although the document recites that the surface layer (C) with low crystallinity covers the core material without separating and that the BET specific surface area is preferably 1 $m^2$/g or smaller, the art of the document is inadequate in that such a small BET specific surface area worsens lithium reception during charging, thereby lowering the charging capacity.

In contrast, according to the present invention, since the graphite composite powder (A) being in spherical, elliptical, or massive form coexists with the artificial graphite powder (B), it is possible to increase the packing ratio of the negative electrode material in the electrode without difficulty while obtaining high electrode density. Besides, by varying the combination of the graphite composite powder (A), which has a high BET specific surface area, and the artificial graphite powder (B), which has a low BET specific surface area, it is possible to control the BET specific surface area.

[Examples]

The present invention will be explained below by referring to examples. It is to be understood that these examples are by no means restrictive and any modifications can be added thereto insofar as these modifications do not depart from the scope of the invention.

[Example 1]

Fusible and clumpy heat-treated graphite crystal precursor with a softening point of 385 °C was obtained by subjecting coal tar pitch, whose quinoline insoluble content is 0.05 weight % or lower, to 10 hours heat treatment at 460 °C in a kiln. The softening point was measured by the method described previously.

Heat treatment graphite crystal precursor thus obtained was pulverized first with a medium-stage pulverizer (Orient Mill manufactured by Seishin Enterprise Co., Ltd.) and then further pulverized to a fine powder using a micropulverizer (Turbo-Mill manufactured by Matsubo Corporation) to obtain micronized graphite crystal precursor powder with a median diameter of 17 $\mu$m. The diameter was measured by the method described previously.

The micronized graphite crystal precursor powder obtained above was mixed with natural graphite, whose median diameter is 17 $\mu$m, aspect ratio is 1.9 and tap density is 1.0 g/cm$^3$, so that the ratio of the amount of natural graphite to the amount of the sum of the two components is 50 weight %, to give a mixed powder containing graphite (D) and heat-treated graphite crystal precursor. The aspect ratio mentioned was determined by the method described previously.

The mixed powder thus obtained containing the heat-treated graphite crystal precursor was placed in a metal vessel and heat treatment A was conducted at 540 °C for 2 hours under a nitrogen atmosphere using a box-shaped electric furnace. During this heat treatment A, micronized graphite crystal precursor powder was molten and formed a mass of homogeneous mixture of compounded heat-treated graphite crystal precursor containing natural graphite.

The solidified compounded heat-treated graphite crystal precursor thus obtained was pulverized with a coarse-size pulverizer (Roll Jaw Crusher manufactured by Yoshida Seisakusho Co., Ltd.) and further pulverized using a micropulverizer (Turbo-Mill manufactured by Matsubo Corporation) to give a powder with a median diameter of 18.5 $\mu$m.

The powder obtained was placed in a vessel and calcined for one hour at 1000 °C in an electric furnace under a nitrogen atmosphere. The powder retained its original form after calcination without melting or clump formation.

The powder calcined was transferred to a graphite crucible and graphitized at 3000 °C for 5 hours under an inactive atmosphere using a direct current-applied kiln to give a graphite-composite mixture powder (C) (negative electrode material of Example 1).

Physical properties of the negative electrode material obtained in Example 1 were determined. The median diameter, tap density and BET specific surface area were found to be 17.5 $\mu$m, 1.2 g/cm$^3$, and 2.3 m$^2$/g, respectively.

Cross-sectional photograph of the graphite-composite mixture powder (C) was taken using a polarizing microscope by the procedure described before and the graphite composite powder (A) was identified in the negative electrode material of Example 1 on the basis of different orientation property of graphite composite powder (A). It was shown that the ratio of graphite composite powder (A) in the negative electrode material (graphite-composite mixture powder (C)) of Example 1 is 55 weight % and that of artificial graphite powder (B) is 45 weight %.

Further, physical properties of graphite composite powder (A) and artificial graphite powder (B) were measured. Graphite composite powder (A) had a median diameter of 19.5 $\mu$m and aspect ratio of 1.2. The median diameter of artificial graphite powder (B) was 8.5 $\mu$m.

Furthermore, crystallinity of the negative electrode material of Example 1 was examined by the X-ray diffraction method, and the following data were obtained: $d_{002}$ = 0.3357 nm, $Lc_{004}$ > 1000 Å (100 nm).

An electrode with an electrode density of 1.63 $\pm$ 0.05 g/cm$^3$ was prepared using the negative electrode material of Example 1, according to the method described below. The active material orientation ratio of the electrode prepared was 0.17.

A lithium secondary battery was prepared using the negative electrode material of Example 1, according to the method described below, and discharging capacity, charging and discharging efficiency and load characteristics were measured. Likewise, a lithium secondary battery prepared was disassembled while being charged and charging swelling ratio was determined by measuring the thickness of the electrode.

Physical properties measured for the negative electrode material of Example 1 are presented in Tables 1-3.

<Preparation of Electrode>

The negative electrode material was mixed with a CMC solution, which worked to increase viscosity, and an SBR solution as binder resin, so that the ratio of CMC and SBR to negative electrode material after drying is 1 weight % each. The mixture was stirred, made into slurry and applied onto a copper film using a doctor blade. The thickness of application was adjusted so that coating of electrode after drying, excluding copper film, was 10 mg/cm$^2$.

The electrode was dried at 80 °C and then pressed until electrode density (excluding copper film) was 1.73 $\pm$ 0.05 g/cm$^3$. After pressing, an electrode of 12 mm in diameter was punched out and the weight of negative electrode active material was calculated (weight of electrode - weight of copper film - weight of binder resin).

<Preparation of lithium secondary battery>

The electrode prepared above was vacuum dried at 110 °C, transferred to a globe box, and coin battery (lithium secondary battery) was prepared under an argon atmosphere using 1M-LiPF$_6$ in ethylene carbonate (EC)/diethyl carbonate (DEC) (1/1) as an electrolyte solution, polyethylene separator as a separator and lithium metal counter electrode as a counter electrode.

<Method of Measuring Discharging Capacity>

Lithium counter electrode was charged up to 5mV at a current density of 0.2 mA/cm$^2$, charged further at a constant voltage of 5mV until the current reached 0.02 mA. The negative electrode was doped with lithium and discharging was done for lithium counter electrode up to 1.5 V at a current density of 0.4 mA/cm$^2$. This charging and discharging cycle was repeated three times and discharging at the 3rd cycle was measured as discharging capacity.

<Calculation Method of Charging/Discharging Efficiency>

This was calculated as follows:

- electrode density 1.73 $\pm$ 0.05 g/cm$^3$
-

```
charging/discharging efficiency (%) = {initial

discharging capacity (mAh/g) / initial charging capacity

(mAh/g)} × 100
```

<Calculation Method of Charging Swelling Rate>

After three cycles of charging and discharging in the measurement of discharging capacity, termination of the charging of the fourth cycle was carried out under the constant capacity charging at 300 mAh/g. Coin battery in the charging state was disassembled in an argon globe box avoiding short circuit, the electrode was removed and the thickness of the electrode at the time of charging, excluding copper foil, was measured. By referring to the thickness of press electrode, excluding copper foil, charging swelling rate was calculated by the following formula:

```
{(thickness of charging electrode - thickness of press

electrode) / thickness of press electrode} × 100 =

charging swelling rate (%).
```

<Calculation Method of Load Characteristics>

- electrode density 1.73 $\pm$ 0.05 g/cm$^3$
- 2C discharging capacity (mAh/g): discharging capacity when discharging was done at current density of 7.0 mA/cm$^2$
- 0.2C discharging capacity (mAh/g): discharging capacity when discharging was done at current density of 0.7 mA/cm$^2$
-

```
load characteristics (%) = {2C discharging capacity

(mAh/g) / 0.2C discharging capacity (mAh/g)} × 100
```

[Example 2]

Graphite crystal precursor mixture obtained by the procedure similar to that of Example 1 was pulverized to a coarse powder using a coarse-size pulverizer (Roll Jaw Crusher manufactured by Yoshida Seisakusho Co., Ltd.) and pulverized further to a finer powder with a pulverizing machine (hammer mill, Dalton Co., Ltd.). The fine powder obtained was sieved through sieve pores of 45 $\mu$m to obtain micronized powder of 21.0 $\mu$m median diameter. The procedures of calcination treatment and thereafter were the same as that of Example 1 and a graphite-composite mixture powder (C) (negative electrode material of Example 2) was obtained.

The negative electrode material obtained in Example 2 was examined for its physical properties with the result that the median diameter was 20.0 $\mu$m, tap density was 1.20 g/cm$^3$, and BET specific surface area was 1.8 m$^2$/g. The crystallinity measured by X-ray diffraction method, as in Example 1, gave the values of $d_{002}$ = 0.3357 nm, $Lc_{004}$ > 1000 Å (100 nm).

The ratio of graphite composite powder (A) and artificial graphite powder (B) in the negative electrode material (graphite-composite mixture powder (C)) in Example 2 was determined by the same method as described for Example 1. Graphite composite powder (A) accounted for 60 weight % and artificial graphite powder (B) accounted for 40 weight %. Further, physical properties of graphite composite powder (A) and artificial graphite powder (B) were measured. The graphite composite powder (A) had a median diameter of 22.3 $\mu$m and an aspect ratio of 1.8. Artificial graphite powder (B) had a median diameter of 7.1 $\mu$m.

Of the cross sections of particles of graphite-composite mixture powder (C) after the graphitization process of the negative electrode material of Example 2, polarizing microscope photograph (magnification : 1500), taken for a portion of graphite composite powder (A), is shown in Fig. 1(a). The area showing graphite (D) and graphite (E) in the cross sectional view of the particles in Fig. 1(a) is shown schematically in Fig. 1(b). The aim of this photograph is to explain the presence of different orientation and it by no means limits the particles of graphite-composite mixture powder (C) in Example 2 to the cited one. The core part of the particles corresponding to graphite (D) has a common pattern of color in a wide area, while in the outer area corresponding to graphite (E), various anisotropic units with different colors exist in more than one location and there is a different pattern of anisotropic unit from that of graphite (D).

An electrode was prepared using negative electrode material of Example 2, by the same procedure as described for Example 1, and an active material orientation ratio of the electrode was determined and found to be 0.15. Furthermore, a lithium secondary battery was prepared using negative electrode material of Example 2 by the same procedure as described for Example 1, and discharging capacity, charging/discharging efficiency, load characteristics and charging swelling rate were determined. The result of the determination is shown in Tables 1-3.

[Example 3]

A graphite-composite mixture powder (C) (negative electrode material of Example 3) was obtained by the same procedure as described for Example 2, except that the ratio of the amount of natural graphite (median diameter 17.0 $\mu$m, aspect ratio 1.9, tap density 1.0 g/cm$^{3)}$), which was to be mixed with micronized graphite crystal precursor powder, to the total amount of micronized graphite crystal precursor powder and natural graphite was set at 30 weight %.

Physical properties of the negative electrode material obtained in Example 3 were determined in the same manner as described for Example 1. Its median diameter was 17.5 $\mu$m, tap density was 1.16 g/cm$^3$, and BET specific surface area was 2.5 m$^2$/g. Its crystallinity determined by the X-ray diffraction method, in the same manner as described for Example 1, gave the following data: $d_{002} = 0.3356$ nm, $Lc_{004} > 1000$ Å (100 nm).

The ratio of graphite composite powder (A) and artificial graphite powder (B) in negative electrode material (graphite-composite mixture powder (C)) of Example 3 was measured in the same manner as described for Example 1. Graphite composite powder (A) accounted for 73 weight % and artificial graphite powder (B) accounted for 27 weight %. Further, physical properties of graphite composite powder (A) and artificial graphite powder (B) were measured. Graphite composite powder (A) had a median diameter of 19.5 $\mu$m and aspect ratio of 1.8. The median diameter of artificial graphite powder (B) was 5.2 $\mu$m.

An electrode was prepared using negative electrode material of Example 3, by the same procedure as described for Example 1, and an active material orientation ratio of the electrode was determined, which was found to be 0.10. Furthermore, a lithium secondary battery was prepared using negative electrode material of Example 3 by the same procedure as described for Example 1, and discharging capacity, charging/discharging efficiency, load characteristics and charging swelling rate were determined.

The result of the determination is shown in Tables 1-3.

[Example 4]

A graphite-composite mixture powder (C) (negative electrode material of Example 4) was obtained by the same procedure as described for Example 2, except that natural graphite to be mixed with micronized graphite crystal precursor powder had a median diameter of 21.0 $\mu$m, aspect ratio of 2.4 and tap density of 0.9 g/cm$^3$, and the ratio of the amount of natural graphite to the total amount of micronized graphite crystal precursor powder and natural graphite was set at 50 weight %.

Physical properties of the negative electrode material obtained in Example 4 were determined in the same manner as described for Example 1. Its median diameter was 22.0 $\mu$m, tap density was 1.10 g/cm$^3$, and BET specific surface area was 1.7 m$^2$/g. Its crystallinity determined by the X-ray diffraction method, in the same manner as described for Example 1, gave the following data: $d_{002} = 0.3356$ nm, $Lc_{004} > 1000$ Å (100 nm).

The ratio of graphite composite powder (A) and artificial graphite powder (B) in negative electrode material (graphite-composite mixture powder (C)) of Example 4 was measured in the same manner as described for Example 1. Graphite composite powder (A) accounted for 58 weight % and artificial graphite powder (B) accounted for 42 weight %. Further, physical properties of graphite composite powder (A) and artificial graphite powder (B) were measured. Graphite composite powder (A) had a median diameter of 23.0 $\mu$m and aspect ratio of 2.9. The median diameter of artificial graphite powder (B) was 10.2 $\mu$m.

An electrode was prepared using negative electrode material of Example 4, by the same procedure as described for Example 1, and an active material orientation ratio of the electrode was determined, which was found to be 0.08. Furthermore, a lithium secondary battery was prepared using negative electrode material of Example 4 by the same procedure as described for Example 1, and discharging capacity, charging/discharging efficiency, load characteristics and charging swelling rate were determined.

The result of the determination is shown in Tables 1-3.

[Example 5]

Graphite-composite mixture powder (C) (negative electrode material of Example 5) was obtained by the same procedure as described for Example 2 except that pitch material with a softening point of 430 °C was used.

Physical properties of the negative electrode material obtained in Example 5 were determined in the same manner as described for Example 1. Its median diameter was 18.0 $\mu$m, tap density was 1.16 g/cm$^3$, and BET specific surface area was 2.4 m$^2$/g. Its crystallinity determined by the X-ray diffraction method, in the same manner as described for Example 1, gave the following data: $d_{002} = 0.3357$ nm, $Lc_{004} > 1000$ Å (100 nm) .

The ratio of graphite composite powder (A) and artificial graphite powder (B) in negative electrode material (graphite-composite mixture powder (C)) of Example 5 was determined in the same manner as described for Example 1. Graphite composite powder (A) accounted for 53 weight % and artificial graphite powder (B) accounted for 47 weight %. Determination of physical properties revealed that graphite composite powder (A) has a median diameter of 19.8 $\mu$m and an aspect ratio of 1.4, and artificial graphite powder (B) has a median diameter of 7.9 $\mu$m.

An electrode was prepared using negative electrode material of Example 5, by the same procedure as described for Example 1, and an active material orientation ratio of the electrode was determined, which was found to be 0.10. Furthermore, a lithium secondary battery was prepared using negative electrode material of Example 5 by the same procedure as described for Example 1, and discharging capacity, charging/discharging efficiency, load characteristics and charging swelling rate were determined.

The result of the determination is shown in Tables 1-3.

[Example 6]

A graphite-composite mixture powder (C) (negative electrode material of Example 6) was obtained by the same procedure as described for Example 2, except that micropulverization treatment of the clump of heat-treated graphite crystal precursor was omitted in the production of negative electrode material in Example 2 and natural graphite was mixed with graphite crystal precursor having a median diameter of 60 $\mu$m.

Physical properties of the negative electrode material obtained in Example 6 were determined in the same manner as described for Example 1. Its median diameter was 18.0 $\mu$m, tap density was 1.22 g/cm$^3$, and BET specific surface area was 1.9 m$^2$/g. Its crystallinity determined by the X-ray diffraction method, in the same manner as described for Example 1, gave the following data: $d_{002}$ = 0.3357 nm, $Lc_{004}$ > 1000 Å (100 nm) .

The ratio of graphite composite powder (A) and artificial graphite powder (B) in negative electrode material (graphite-composite mixture powder (C)) of Example 6 was determined in the same manner as described for Example 1. The graphite composite powder (A) accounted for 52 weight % and artificial graphite powder (B) accounted for 48 weight %. Determination of physical properties revealed that graphite composite powder (A) has a median diameter of 19.3 $\mu$m and an aspect ratio of 2.1, and artificial graphite powder (B) has a median diameter of 7.0 $\mu$m.

An electrode was prepared using negative electrode material of Example 6, by the same procedure as described for Example 1, and an active material orientation ratio of the electrode was determined, which was found to be 0.09. Furthermore, a lithium secondary battery was prepared using negative electrode material of Example 6 by the same procedure as described for Example 1, and discharging capacity, charging/discharging efficiency, load characteristics and charging swelling rate were determined.

The result of the determination is shown in Tables 1-3.

[Example 7]

In Example 7, production was made by the production method 2.

Natural graphite (median diameter 17.0 $\mu$m, aspect ratio 1.9, tap density 1.0 g/cm$^3$) powder, 23 weight %, was mixed with 77 weight % of heavy oil. After calcinations at 1000 °C, the powder was placed in a graphite crucible and graphitized for 5 hours at 3000 °C in a direct current-applied kiln to obtain graphite composite powder (A). The determination of physical properties of the graphite composite powder (A) showed that its median diameter is 18.5 $\mu$m, aspect ratio is 2.3 and tap density is 1.1 g/cm$^3$.

Fusible and clumpy heat-treated graphite crystal precursor (bulk mesophase) was obtained by subjecting coal tar pitch, whose quinoline insoluble content is 0.05 weight % or lower as in Example 1, to 10 hours heat treatment at 460 °C in a kiln. The clump of heat-treated graphite crystal precursor thus obtained was pulverized first with a mediam-stage pulverizer (Orient Mill manufactured by Seishin Enterprise Co., Ltd.) and then further pulverized to a fine powder using a micropulverizer (Turbo-Mill manufactured by Matsubo Corporation) to obtain micronized graphite crystal precursor powder with a median diameter of 17.0 $\mu$m.

The graphite crystal precursor powder thus obtained was placed in a metal vessel and heat treatment was conducted again at 540 °C for 2 hours under a nitrogen atmosphere using a box-shaped electric furnace. During this heat treatment, micronized graphite crystal precursor powder was molten and formed a mass of graphite crystal precursor (bulk mesophase).

The solidified graphite crystal precursor thus obtained was pulverized with a crusher (Roll Jaw Crusher manufactured by Yoshida Seisakusho Co. Ltd.), further micropulverized using a micropulverizer (Turbo-Mill manufactured by Matsubo Corporation) and classified using a wind-force type classification machine (OMC-100 manufactured by Seishin Enterprise Co., Ltd.) to give a powder with a median diameter of 15.3 $\mu$m.

The powder obtained was placed in a vessel and calcined for one hour at 1000 °C under a nitrogen atmosphere. The powder calcined was transferred to a graphite crucible and graphitized at 3000 °C for 5 hours using a direct current-applied kiln to give an artificial graphite powder (B). Determination of its physical properties showed a median diameter of 15.5 $\mu$m.

Graphite composite powder (A) and artificial graphite powder (B), obtained in the above procedure, were mixed in a weight ratio of 50:50 to give graphite-composite mixture powder (C) (negative electrode material of Example 7).

Physical properties of the negative electrode material obtained in Example 7 were determined in the same manner as described for Example 1. Its median diameter was 15.0 $\mu$m, tap density was 1.15 g/cm$^3$, and BET specific surface area was 1.4 m$^2$/g. Its crystallinity determined by the X-ray diffraction method, in the same manner as described for Example 1, gave the following data: $d_{002}$ = 0.3356 nm, $Lc_{004}$ > 1000 Å (100 nm) .

An electrode was prepared using negative electrode material of Example 7, by the same procedure as described for Example 1, and an active material orientation ratio of the electrode was determined, which was found to be 0.07. Furthermore, a lithium secondary battery was prepared using negative electrode material of Example 7 by the same procedure as described for Example 1, and discharging capacity, charging/discharging efficiency, load characteristics and charging swelling rate were determined.

The result of the determination is shown in Tables 1-3.

[Example 8]

Graphite-composite mixture powder (C), prepared in the same manner as described for Example 1, was mixed with natural graphite powder (G) (median diameter 18.2 $\mu$m, aspect ratio 10.1, tap density 0.41 g/cm$^3$) in a weight ratio of 50:50 to give graphite-composite mixture powder (F), which was used as negative electrode material of Example 8.

[Example 9]

Graphite-composite mixture powder (C), prepared in the same manner as described for Example 1, was mixed with natural graphite powder (G)(median diameter 18.2 $\mu$m, aspect ratio 10.1, tap density 0.41 g/cm$^3$) in a weight ratio of 70:30 to give graphite-composite mixture powder (F), which was used as negative electrode material of Example 9.

[Example 10]

Graphite-composite mixture powder (C), prepared in the same manner as described for Example 1, was mixed with natural graphite powder (G) (median diameter 23.0 $\mu$m, aspect ratio 2.3, tap density 0.98 g/cm$^3$) in a weight ratio of 50:50 to give graphite-composite mixture powder (F), which was used as negative electrode material of Example 10.

Physical properties of negative electrode material in Examples 8, 9 and 10 were determined in the same manner as described for Example 1. The result of the determination is presented in Tables 1-3. Graphite (D), graphite composite powder (A), artificial graphite powder (B) and graphite-composite mixture powder (C), which were negative electrode material of these Examples, had the same physical properties as those of Example 1.

[Comparative Example 1]

In Comparative Example 1, the same procedure as in Example 7 was followed except that graphite (D) was not coated with graphite (E).

Natural graphite (median diameter 17.0 $\mu$m, aspect ratio 1.9, tap density 1.0 g/cm$^3$) powder used in Example 1 was transferred to a graphite crucible and graphitized at 3000 °C for 5 hours using a direct current-applied kiln to give a graphite powder (A') derived from natural graphite. This corresponds to graphite (D) not coated with graphite (E). The median diameter of the graphite powder (A') was 16.8 $\mu$m.

Further, the following procedure was followed to obtain artificial graphite powder (B).

Fusible and clumpy heat-treated graphite crystal precursor (bulk mesophase) was obtained by subjecting coal tar pitch, whose quinoline insoluble content is 0.05 weight % or lower, as in Example 1, to 10 hours heat treatment at 460 °C in a kiln. Clumpy heat-treated graphite crystal precursor thus obtained was pulverized first with a medium-stage pulverizer (Orient Mill manufactured by Seishin Enterprise Co., Ltd.) and then further pulverized to a fine powder using a micropulverizer (Turbo-Mill manufactured by Matsubo Corporation) to obtain micronized graphite crystal precursor powder with a median diameter of 17 $\mu$m. This graphite crystal precursor powder was placed in a metal vessel and heat treatment was conducted again at 540 °C for 2 hours under a nitrogen atmosphere using a box-shaped electric furnace. During this second heat treatment, micronized graphite crystal precursor powder was molten and formed a mass of solidified graphite crystal precursor (bulk mesophase). The mass of solidified graphite crystal precursor thus obtained was pulverized again with a crusher (Roll Jaw Crusher manufactured by Yoshida Seisakusho Co., Ltd.) and further micropulverized using a micropulverizer (Turbo-Mill manufactured by Matsubo Corporation), followed by classification using a wind-force type classifier (OMC-100 manufactured by Seishin Enterprise Co., Ltd.), to give a powder with a median diameter of 13.5 $\mu$m. The powder obtained was placed in a vessel and calcined for one hour at 1000 °C in an electric furnace under a nitrogen atmosphere. The powder retained its original form after calcination without melting or clump formation. The powder calcined was transferred to a graphite crucible and graphitized at 3000 °C for 5 hours using a direct current-applied kiln to give an artificial graphite powder (B), whose median diameter was 12.0 $\mu$m.

Graphite powder (A') and artificial graphite powder (B) obtained in the above procedure were mixed in a weight ratio of 50:50 to obtain graphite-composite mixture powder (C) (negative electrode material of Comparative Example 1).

Physical properties of the negative electrode material obtained in Comparative Example 1 were determined in the same manner as described for Example 1. Its median diameter was 16.0 $\mu$m, tap density was 1.20 g/cm$^3$, and BET specific surface area was 2.1 m$^2$/g. Its crystallinity determined by the X-ray diffraction method, in the same manner as described for Example 1, gave the following data: $d_{002}$ = 0.3357 nm, $Lc_{004}$ > 1000 Å (100 nm) .

An electrode was prepared using negative electrode material of Comparative Example 1, by the same procedure as described for Example 1, and an active material orientation ratio of the electrode was determined, which was found to be 0.06.

Furthermore, a lithium secondary battery was prepared using negative electrode material of Comparative Example 1 by the same procedure as described for Example 1, and discharging capacity, charging/discharging efficiency, load characteristics and charging swelling rate were determined.

The result of the determination is shown in Tables 1-3.

[Comparative Example 2]

A graphite-composite mixture powder (C) (negative electrode material of Comparative Example 2) was obtained by the same procedure as described for Example 2, except that natural graphite to be mixed with graphite crystal precursor had a median diameter of 20.0 $\mu$m, aspect ratio of 10.5 and tap density of 0.4 g/cm$^3$.

Physical properties of the negative electrode material obtained in Comparative Example 2 were determined in the same manner as described for Example 1. Its median diameter was 20.3 $\mu$m, tap density was 0.62 g/cm$^3$, and BET specific surface area was 2.1 m$^2$/g. Its crystallinity determined by the X-ray diffraction method, in the same manner as described for Example 1, gave the following data: $d_{002}$ = 0.3356 nm, $Lc_{004}$ > 1000 Å (100 nm).

The ratio of graphite composite powder (A) and artificial graphite powder (B) in negative electrode material (graphite-composite mixture powder (C)) of Comparative Example 2 was determined in the same manner as described for Example 1. The graphite composite powder (A) accounted for 54 weight % and artificial graphite powder (B) accounted for 46 weight %. Determination of physical properties revealed that graphite composite powder (A) has a median diameter of 19.0 $\mu$m and an aspect ratio of 13.2, and artificial graphite powder (B) has a median diameter of 7.5 $\mu$m.

An electrode was prepared using negative electrode material of Comparative Example 2, by the same procedure as described for Example 1, and an active material orientation ratio of the electrode was determined, which was found to be 0.04.

Furthermore, a lithium secondary battery was prepared using negative electrode material of Comparative Example 2 by the same procedure as described for Example 1, and discharging capacity, charging/discharging efficiency, load characteristics and charging swelling rate were determined.

The result of the determination is shown in Tables 1-3.

[Comparative Example 3]

A graphite-composite mixture powder (C) (negative electrode material of Comparative Example 2) was obtained by the same procedure as described for Example 2, except that natural graphite to be mixed with graphite crystal precursor had a median diameter of 24.0 $\mu$m, aspect ratio of 25.1 and tap density of 0.3 g/cm$^3$.

Physical properties of the negative electrode material obtained in Comparative Example 3 were determined in the same manner as described for Example 1. Its median diameter was 23.1 $\mu$m, tap density was 0.51 g/cm$^3$, and BET specific surface area was 1.7 m$^2$/g. Its crystallinity determined by the X-ray diffraction method, in the same manner as described for Example 1, gave the following data: $d_{002}$ = 0.3356 nm, $Lc_{004}$ > 1000 Å (100 nm) .

The ratio of graphite composite powder (A) and artificial graphite powder (B) in negative electrode material (graphite-composite mixture powder (C)) of Comparative Example 3 was determined in the same manner as described for Example 1. The graphite composite powder (A) accounted for 57 weight % and artificial graphite powder (B) accounted for 43 weight %. Determination of physical properties revealed that graphite composite powder (A) has a median diameter of 25.2 $\mu$m and an aspect ratio of 22.3, and artificial graphite powder (B) has a median diameter of 7.8 $\mu$m.

An electrode was prepared using negative electrode material of Comparative Example 3, by the same procedure as described for Example 1, and an active material orientation ratio of the electrode was determined, which was found to be 0.03.

Furthermore, a lithium secondary battery was prepared using negative electrode material of Comparative Example 3 by the same procedure as described for Example 1, and discharging capacity, charging/discharging efficiency, load characteristics and charging swelling rate were determined.

The result of the determination is shown in Tables 1-3.

[Comparative Example 4]

Natural graphite (median diameter 17.0 μm, aspect ratio 1.9, tap density 1.0 g/cm$^3$) powder, used in Example 1, was mixed with graphite crystal precursor powder, which is similar to that used in Example 1, so that the ratio of the amount of graphite crystal precursor powder to the total amount of micronized graphite crystal precursor powder and natural graphite is 50 weight %, to give a mixed powder of graphite (D) and graphite crystal precursor. Aspect ratio was measured by the method described previously. This powder was subjected to heat treatment A, pulverization, calcination and graphitization, as in Example 1, to give negative electrode material of Comparative Example 4.

[Comparative Example 5]

To the mixed powder of graphite (D) and graphite crystal precursor, obtained in Comparative Example 4, was added a phenol resin solution diluted to 50 weight % with commercial methanol, so that the amount of phenol resin solution represented 5 weight % of the total weight of the mixed powder. This powder was subjected to heat treatment A, pulverization, calcination and graphitization, as in Example 1 to give negative electrode material of Comparative Example 5

Physical properties of the negative electrode material obtained in Comparative Examples 4 and 5 were determined in the same manner as described for Example 1.

The result of the determination is shown in Tables 1-3. It is to be noted that, in Comparative Examples 4 and 5, a component corresponding to artificial graphite powder (B) is not contained and graphite composite powder (A) alone was used as negative electrode material. Therefore, tap density, particle diameter and specific surface area of graphite composite powder (A) in Comparative Examples 4 and 5 also indicate tap density, particle diameter and specific surface area of the negative electrode material (in Table 1, this is shown as the mark (*) and individual values are omitted).

[Table 1]

Table 1

| | graphite (D) | | | graphite composite powder (A) (graphite (D)+(E)) | | | | artificial graphite powder (B) | |
|---|---|---|---|---|---|---|---|---|---|
| | aspect ratio | tap density (g/cm3) | particle diameter (μm) | aspect ratio | tap density (g/cm$^3$) | particle diameter (μm) | specific surface area (m$^2$/g) | particle diameter (μm) | specific surface area (m$^2$/g) |
| Example 1 | 1.9 | 1.0 | 17.0 | 1.2 | - | 19.5 | - | 8.5 | - |
| Example 2 | 1.9 | 1.0 | 17.0 | 1.8 | - | 22.3 | - | 7.1 | - |
| Example 3 | 1.9 | 1.0 | 17.0 | 1.8 | - | 19.5 | - | 5.2 | - |
| Example 4 | 2.4 | 0.90 | 21.0 | 2.9 | - | 23.0 | - | 10.2 | - |
| Example 5 | 1.9 | 1.0 | 17.0 | 1.4 | - | 19.8 | - | 7.9 | - |
| Example 6 | 1.9 | 1.0 | 17.0 | 2.1 | - | 19.3 | - | 7.0 | - |
| Example 7 | 1.9 | 1.0 | 17.0 | 2.3 | 1.1 | 18.5 | 2.8 | 15.5 | 0.7 |
| Example 8 | 1.9 | 1.0 | 17.0 | 1.2 | - | 19.5 | - | 8.5 | - |
| Example 9 | 1.9 | 1.0 | 17.0 | 1.2 | - | 19.5 | - | 8.5 | - |
| Example 10 | 1.9 | 1.0 | 17.0 | 1.2 | - | 19.5 | - | 8.5 | - |
| Comparative Example 1 | 1.9 | 1.0 | 17.0 | - | 1.2 | 16.8 | 2.3 | 12.0 | 0.6 |
| Comparative Example 2 | 10.5 | 0.40 | 20.0 | 13.2 | - | 19.0 | - | 7.5 | - |
| Comparative Example 3 | 25.1 | 0.30 | 24.0 | 22.3 | - | 25.2 | - | 7.8 | - |
| Comparative Example 4 | 1.9 | 1.0 | 17.0 | - | (*) | | | - | - |
| Comparative Example 5 | 1.9 | 1.0 | 17.0 | - | (*) | | | - | - |

[Table 2]

Table 2

| | graphite-composite mixture powder(C) (graphite composite powder (A) + artificial graphite powder (B)) | | | | |
| --- | --- | --- | --- | --- | --- |
| | tap density (g/cm$^3$) | specific surface area (m$^2$/g) | particle diameter ($\mu$m) | $d_{002}$ (nm) | $Lc_{004}$ (nm) |
| Example 1 | 1.20 | 2.3 | 17.5 | 0.3357 | 100 < |
| Example 2 | 1.20 | 1.8 | 20.0 | 0.3357 | 100 < |
| Example 3 | 1.16 | 2.5 | 17.5 | 0.3356 | 100 < |
| Example 4 | 1.10 | 1.7 | 22.0 | 0.3356 | 100 < |
| Example 5 | 1.16 | 2.4 | 18.0 | 0.3357 | 100 < |
| Example 6 | 1.22 | 1.9 | 18.0 | 0.3357 | 100 < |
| Example 7 | 1.15 | 1.4 | 15.0 | 0.3356 | 100 < |
| Example 8 | 1.20 | 2.3 | 17.5 | 0.3357 | 100 < |
| Example 9 | 1.20 | 2.3 | 17.5 | 0.3357 | 100 < |
| Example 10 | 1.20 | 2.3 | 17.5 | 0.3357 | 100 < |
| Comparative Example 1 | 1.20 | 2.1 | 16.0 | 0.3357 | 100 < |
| Comparative Example 2 | 0.62 | 2.1 | 20.3 | 0.3356 | 100 < |
| Comparative Example 3 | 0.51 | 1.7 | 23.1 | 0.3356 | 100 < |
| Comparative Example 4 | 1.19 | 2.3 | 16.3 | 0.3357 | 100 < |
| Comparative Example 5 | 1.20 | 1.5 | 16.0 | 0.3357 | 100 < |

[Table 3]

Table 3

| | graphite-composite mixture powder(C) (graphite composite powder (A) + artificial graphite powder (B)) | | | | | |
| --- | --- | --- | --- | --- | --- | --- |
| | battery capacity (mA/h) | orientation ratio | charging/discharging efficiency (%) | load characteristics (%) | charging swelling rate (%) | compounding |
| Example 1 | 350 | 0.17 | 91.1 | 87 | 23 | * |
| Example 2 | 354 | 0.15 | 91.1 | 87 | 24 | * |
| Example 3 | 352 | 0.10 | 91.0 | 85 | 24 | * |
| Example 4 | 352 | 0.08 | 91.5 | 86 | 25 | * |
| Example 5 | 351 | 0.10 | 91.6 | 86 | 24 | * |
| Example 6 | 351 | 0.09 | 92.1 | 86 | 25 | * |
| Example 7 | 352 | 0.07 | 92.0 | 87 | 25 | mixed |
| Example 8 | 349 | 0.07 | 91.7 | 83 | 24 | * |
| Example 9 | 348 | 0.08 | 92.0 | 84 | 24 | * |
| Example 10 | 351 | 0.10 | 90.8 | 84 | 25 | * |
| Comparative Example 1 | 347 | 0.06 | 90.3 | 86 | 30 | mixed |
| Comparative Example 2 | 349 | 0.04 | 90.5 | 79 | 35 | * |
| Comparative Example 3 | 348 | 0.03 | 90.1 | 74 | 38 | * |
| Comparative Example 4 | 344 | 0.05 | 90.2 | 83 | 37 | * |
| Comparative Example 5 | 345 | 0.05 | 89.4 | 85 | 38 | * |

In the column "Compounding" of Tables 1-3 above, the mark * indicates that graphite composite powder (A) and artificial graphite powder (B) were produced simultaneously, and the term "mixed" indicates that the two were produced independently and mixed thereafter.

Negative electrode material of Comparative Example 1 comprises graphite (D), which is not bound or coated with graphite (E), and artificial graphite powder (B). Because the material is not made into a composite, its electrode orientation ratio is low. Therefore, charging swelling rate of the electrode is very high, as can be seen from Tables 1-3.

In the negative electrode material of Comparative Examples 2 and 3, the aspect ratio of graphite (D) is higher than those provided in the present invention and the electrode orientation ratio of the negative electrode material obtained is much lower than those provided in the present invention. As the result, charging swelling rate of each electrode is very high and charging/discharging efficiency is low, with low load characteristics.

In the negative electrode material of Comparative Examples 4 and 5, particles corresponding to artificial graphite powder (B) of the present invention, do not exist. As the result, sufficient battery capacity is not obtained and charging swelling rate of the electrode is high.

On the other hand, in the negative electrode material obtained in Examples 1-7, all the characteristics of tap density, crystallinity and electrode orientation property satisfy the range provided in the present invention. The battery made from these negative electrode materials shows high discharging capacity and low charging swelling rate of electrode.

The present invention has been explained in detail above with reference to specific embodiments. However, it is evident to those skilled in the art that various modifications can be added thereto without departing from the intention and the scope of the present invention.

The present application is based on the description of Japanese Patent Application No. 2004-035207, which was filed February 12, 2004; and their entireties are incorporated herewith by reference.

[Industrial Applicability]

According to the negative-electrode material for lithium secondary battery of the present invention, when used in high electrode density (e.g. 1.6 g/cm$^3$ or higher), it is possible to provide an excellent lithium secondary battery which has large discharging capacity, achieves high efficiency during charging and discharging, exhibits superior load characteristics, and involves only a small amount of swelling of the electrode during charging. It is therefore suitably used for various areas such as electronic devices in which lithium secondary batteries are used.

Also, according to the production method of the negative-electrode material for lithium secondary battery of the present invention, it is possible to produce the negative-electrode material for lithium secondary battery efficiently with stability. It therefore has great value in the industrial production area of lithium secondary batteries.

**Claims**

1. A negative-electrode material for lithium secondary battery, comprising a graphite-composite mixture powder (C) that comprises:

   a graphite composite powder (A) in which a graphite (D), whose aspect ratio is 1.2 or larger and 4.0 or smaller, is compounded with a graphite (E), which has orientation different from orientation of said graphite (D); and an artificial graphite powder (B).

2. A negative-electrode material for lithium secondary battery as defined in claim 1, wherein said graphite (D) is a natural graphite.

3. A negative-electrode material for lithium secondary battery as defined in claim 1 or claim 2, wherein said graphite-composite mixture powder (C) has
   a tap density of 0.8 g/cm$^3$ or higher,
   a BET specific surface area of 1 m$^2$/g or larger and 5 m$^2$/g or smaller, and
   an interlayer spacing d$_{002}$ between (002) planes of 0.3360 nm or smaller acoording to X-ray diffraction.

4. A negative-electrode material for lithium secondary battery as defined in any one of claims 1-3, wherein said graphite composite powder (A) has an aspect ratio of 1.1 or higher and 4.0 or lower.

5. A negative-electrode material for lithium secondary battery as defined in any one of claims 1-4, wherein said graphite composite powder (A) has

a tap density of 0.80 g/cm$^3$ or higher and 1.35 g/cm$^3$ or lower,
a BET specific surface area of 0.8 m$^2$/g or larger and 5.5 m$^2$/g or smaller, and
a volume-based average particle diameter of 6 $\mu$m or larger and 80 $\mu$m or smaller.

6. A negative-electrode material for lithium secondary battery as defined in any one of claims 1-5, wherein said artificial graphite powder (B) has
a BET specific surface area of 0.3 m$^2$/g or larger and 3 m$^2$/g or smaller, and
a volume-based average particle diameter of 3 $\mu$m or larger and 30 $\mu$m or smaller.

7. A negative-electrode material for lithium secondary battery as defined in any one of claims 1-6, wherein the ratio of the amount of said graphite (D) to the amount of said graphite composite powder (A) is 30 weight % or higher and 97 weight % or lower.

8. A negative-electrode material for lithium secondary battery as defined in any one of claims 1-7, wherein the ratio of the amount of said graphite composite powder (A) to the amount of said graphite-composite mixture powder (C) is 35 weight % or higher and 98 weight % or lower.

9. A negative-electrode material for lithium secondary battery as defined in any one of claims 1-8, wherein said graphite (E) and said artificial graphite powder (B) are made up of the same material.

10. A negative-electrode material for lithium secondary battery as defined in any one of claims 1-9, wherein said negative-electrode material further comprises a natural graphite powder (G), and the ratio of the amount of said graphite-composite mixture powder (C) to the total amount of said graphite-composite mixture powder (C) and said natural graphite powder (G) is 20 weight % or higher and 90 weight % or lower.

11. A negative-electrode material for lithium secondary battery as defined in any one of claims 1-10, wherein when an electrode with an electrode density of 1.63$\pm$0.05 g/cm$^3$ is formed using said negative-electrode material as an active material, the orientation ratio of the active material is 0.07 or higher.

12. A negative-electrode material for lithium secondary battery as defined in any one of claims 1-11, wherein a lithium secondary battery produced using said negative-electrode material has a discharging capacity of 345 mAh/g or larger.

13. A method of producing a negative-electrode material for lithium secondary battery, comprising:

mixing pulverized matter of a graphite crystal precursor, which is obtained through heat treatment of a pitch material whose quinoline insoluble content is 3 weight % or lower, and graphite (D), whose aspect ratio is 1.2 or higher and 4.0 or lower and whose tap density is 0.7 g/cm$^3$ or higher and 1.35 g/cm$^3$ or lower;
carrying out heat treatment A on the mixture obtained from said mixing;
pulverizing the product of said heat treatment A; and
carrying out heat treatment B on the product of said pulverizing.

14. A method of producing a negative-electrode material for lithium secondary battery, comprising:

preparing a graphite composite powder (A) from a pitch material, whose quinoline insoluble content is 3 weight % or lower, and a graphite (D), whose aspect ratio is 1.2 or higher and 4.0 and whose tap density is 0.7 g/cm$^3$ or higher and 1.35 g/cm$^3$ or lower;
preparing an artificial graphite powder (B) from a pitch material; and
mixing the graphite composite powder (A) and the artificial graphite powder (B).

15. A negative electrode for lithium secondary battery, comprising:

a current collector; and
an active material layer formed on said current collector;

wherein said active material layer comprises a negative-electrode material for lithium secondary battery as defined in any one of claims 1-12.

16. A negative electrode for lithium secondary battery, comprising:

a current collector; and
an active material layer formed on said current collector;

wherein said active material layer comprises a negative-electrode material for lithium secondary battery produced by a production method as defined in claim 13 or claim 14.

17. A lithium secondary battery comprising:

a positive electrode and a negative electrode capable of intercalating and deintercalating lithium ions; and
an electrolyte;

wherein said negative electrode is a negative electrode for lithium secondary battery as defined in claim 15 or claim 16.

## FIG. 1(a)

## FIG. 1(b)

▨ · · · GRAPHITE (D)

▦ · · · GRAPHITE (E)

## INTERNATIONAL SEARCH REPORT

| | International application No. |
|---|---|
| | PCT/JP2005/001775 |

| A. CLASSIFICATION OF SUBJECT MATTER |
|---|
| Int.Cl⁷ H01M4/58, C01B31/04, H01M4/02, H01M10/40 |

According to International Patent Classification (IPC) or to both national classification and IPC

| B. FIELDS SEARCHED |
|---|

| Minimum documentation searched (classification system followed by classification symbols) |
|---|
| Int.Cl⁷ H01M4/36-4/62, C01B31/04, H01M4/00-4/04, H01M10/40 |

Documentation searched other than minimum documentation to the extent that such documents are included in the fields searched
Jitsuyo Shinan Koho          1922-1996     Jitsuyo Shinan Toroku Koho     1996-2005
Kokai Jitsuyo Shinan Koho    1971-2005     Toroku Jitsuyo Shinan Koho     1994-2005

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2002-175810 A  (Mitsubishi Chemical Corp.), 21 June, 2002 (21.06.02), Full text (Family: none) | 1-17 |
| Y | JP 2003-176115 A  (Adokemuko Kabushiki Kaisha), 24 June, 2003 (24.06.03), Full text (Family: none) | 1-17 |
| Y | WO 00/22687 A1  (Showa Denko Kabushiki Kaisha), 20 April, 2000 (20.04.00), Full text & EP 1122803 A1          & CN 1320284 A | 1-17 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 May, 2005 (13.05.05) | 31 May, 2005 (31.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/001775

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-128405 A  (Kabushiki Kaisha SEC), 08 May, 2003 (08.05.03), Full text (Family: none) | 1-17 |
| Y | JP 2001-089118 A  (Hitachi Chemical Co., Ltd.), 03 April, 2001 (03.04.01), Full text (Family: none) | 1-17 |
| P,A | JP 2004-127913 A  (Matsushita Electric Industrial Co., Ltd.), 22 April, 2004 (22.04.04), & US 2004/23115 A1 | 1-17 |
| P,A | JP 2004-063321 A  (JFE Chemical Kabushiki Kaisha), 26 February, 2004 (26.02.04), (Family: none) | 1-17 |
| A | JP 2003-173774 A  (Nippon Carbon Co., Ltd.), 20 June, 2003 (20.06.03), (Family: none) | 1-17 |
| A | JP 09-147862 A  (Hitachi Maxell, Ltd.), 06 June, 1997 (06.06.97), (Family: none) | 1-17 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000182617 A
- JP 2002373656 A
- JP 2003173778 A
- JP 2004035207 A